# EUROPÄISCHE PATENTSCHRIFT

(11) **EP 2 143 257 B1**
(45) Veröffentlichungstag und Bekanntmachung des Hinweises auf die Patenterteilung: **02.05.2012**
(21) Anmeldenummer: 08717814.1
(22) Anmeldetag: 14.03.2008
(51) Int. Cl.: H04M 1/725, H04J 3/06

(54) **VORRICHTUNG UND VERFAHREN ZUR STEUERUNG DES AUFBAUS EINER NUTZKANALVERBINDUNG IN EINEM KOMMUNIKATIONSSYSTEM**
DEVICE AND METHOD FOR CONTROLLING THE CREATION OF A USER CHANNEL CONNECTION IN A COMMUNICATION SYSTEM
DISPOSITIF ET PROCÉDÉ DE COMMANDE DE L'ÉTABLISSEMENT D'UNE LIAISON PAR VOIE PORTEUSE DANS UN SYSTÈME DE COMMUNICATION

(30) Priorität: 16.03.2007 EP 07005479
(43) Veröffentlichungstag der Anmeldung: 13.01.2010
(73) Patentinhaber: Gigaset Communications GmbH, 81379 München (DE)
(72) Erfinder: ALBERTI, Mathäus, 46395 Bocholt (DE); BERAUER, Sven, 06667 Weissenfels (DE); HÜLDER, Stefan, 46286 Dorsten-Deuten (DE); KAMPERSCHROER, Erich, 46499 Hamminkeln (DE); KEHREN, Dieter, 46539 Dinslaken (DE); KLEINDL, Günter, A-3370 Ybbs/Donau (AT); KOCH, Stefan, 47559 Kranenburg (DE); LEPPING, Jürgen, 45359 Essen (DE); LUNGWITZ, Matthias, 46397 Bocholt (DE); MÜLLER, Andreas, 46459 Rees (DE); SCHMIDL, Christine, 81677 München (DE); TÖBBEN, Wilfried, 49624 Löningen (DE); WALDECK, Torsten, 81369 München (DE)
(74) Vertreter: Michalski Hüttermann & Partner
(86) Internationale Anmeldenummer: PCT/EP2008/053072
(87) Internationale Veröffentlichungsnummer: WO 2008/113754

(56) Entgegenhaltungen:
- EP-A- 1 061 718
- WO-A-02/073848
- WO-A-2005/034489
- DE-A1- 19 738 339

## Beschreibung

Die vorliegende Erfindung bezieht sich auf eine Vorrichtung und ein Verfahren zur Steuerung des Aufbaus einer Nutzkanalverbindung in einem Kommunikationssystem mit drahtloser Kommunikation und insbesondere auf eine Vorrichtung und ein Verfahren zur Steuerung des Aufbaus einer synchronen Nutzkanalverbindung aus einem asynchronen Ruhezustand in einem DECT-Kommunikationssystem.

Bei herkömmlichen Kommunikationssystemen beispielsweise dem DECT-Standard (Digital Enhanced Cordless Telecommunication) ist zum schnellen Gesprächsaufbau eine permanente Synchronisation von Mobilteilen auf eine Basisstation (Festteil) notwendig. Dazu werden sogenannte "Dummy-Bearer" als Synchronisationspulse auch dann von der Basisstation bzw. dem Festteil gesendet, wenn kein Gespräch geführt wird.

Eine DECT-Basisstation sendet alle 10 Millisekunden einen sogenannten "Dummy-Bearer" als Synchronisationspuls aus. Alle zu dieser Basisstation gehörenden Mobilteile gehen hierbei zu entsprechenden Zeitpunkten auf Empfang, um sich auf die Basisstation nachzusynchronisieren. Dabei kann das Zwischenintervall für ein Mobilteil, in dem der Empfänger ausgeschaltet bleibt, bis zu 640 Millisekunden betragen. Das Mobilteil hört somit gezielt, ob eine Verbindung gewünscht wird. Das Verfahren ist für das Mobilteil sehr energiesparend, da es in der Ruhephase nur alle 640 Millisekunden für ca. 100 Mikrosekunden auf Empfang gehen muss. Nachteilig ist hierbei jedoch, dass die Basisstation permanent alle 10 Millisekunden den "Dummy-Bearer" als Synchronisationspuls sendet, auch wenn kein Gespräch geführt wird.

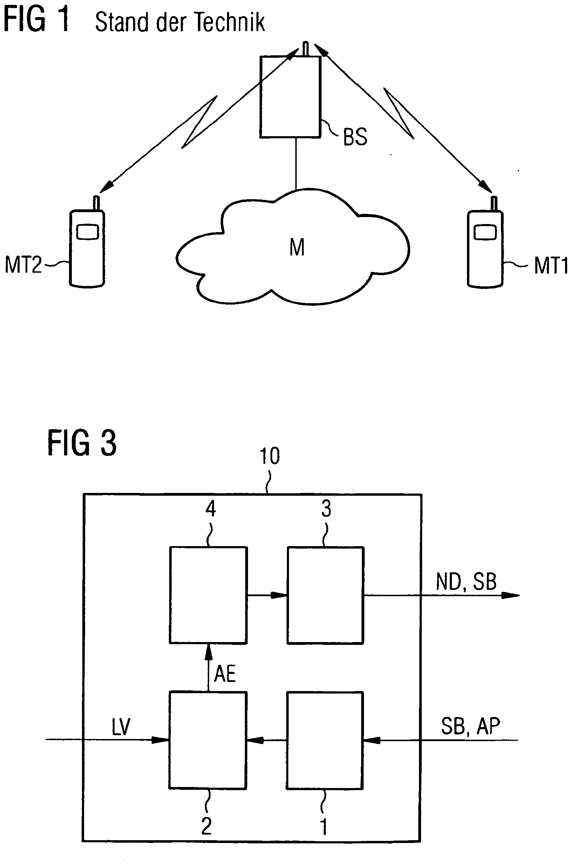

Figur 1 zeigt ein herkömmliches Kommunikationssystem nach dem derzeitigen DECT-Standard, wobei eine Basisstation BS mit einem Kommunikationsnetzwerk N verbunden ist. Das Kommunikationsnetzwerk N kann beispielsweise ein leitungsvermitteltes und/oder ein paketvermitteltes Kommunikationsnetzwerk, wie z.B. das Internet, darstellen. Ferner sind in Figur 1 zwei Mobilteile MT1, MT2 dargestellt, welche sich in Reichweite zur Basisstation BS befinden und über eine drahtlose Schnittstelle bzw. Luftschnittstelle eine Nutzkanalverbindung realisieren können.

In herkömmlichen Kommunikationssystemen synchronisieren sich asynchrone Mobilteile auf den Synchronisationspuls bzw. "Dummy-Bearer" der Basisstation, z.B. wenn sie außerhalb der Reichweite der DECT-Zelle wieder in Reichweite kommen oder erneut eingeschaltet werden. Erfahrungsgemäß kann dazu eine Zeit von mehreren zehn Sekunden vergehen.

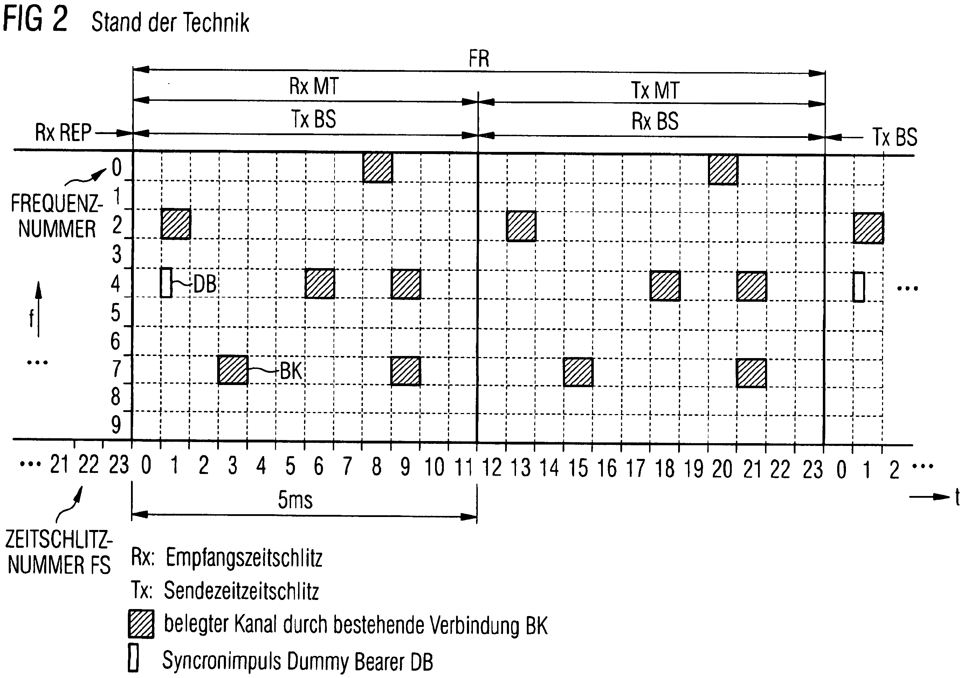

Den Grund dazu verdeutlicht Figur 2, welche die möglichen Positionen eines herkömmlichen Synchronisationspulses bzw. "Dummy-Bearers" DB bei zehn zur Verfügung stehenden Trägerfrequenzen f sowie der zeitlichen Rasterung eines Abschnitts bzw. Zeitrahmens (frame FR) in 24 Zeitschlitzen FS darstellt. Gemäß Figur 2 werden die ersten zwölf Zeitschlitze zum Senden durch die Basisstation BS (Sendelzeitschlitze TX_BS) und die hinteren zwölf Zeitschlitze FS der aufsteigenden Nummerierung zum Empfang durch die Basisstation BS (Empfangszeitschlitze RX_BS) verwendet. Bei den Mobilteilen MT ist es genau anders herum. Die ersten zwölf Zeitschlitze werden daher auch als Empfangszeitschlitze RX_MT und die zweiten zwölf Zeitschlitze als Sendezeitschlitze TX_MT der Mobilteile bezeichnet.

Da das Mobilteil MT über keinerlei Anfangsinformation bezüglich der Sendeposition der Basisstation BS verfügt, muss es auch die Empfangszeitpunkte RX_BS der Basisstation BS mit absuchen. Grundsätzlich kommt jede der in Figur 2 angedeuteten sechs Verbindungen bzw. belegten Kanäle BK sowie der viel kürzere "Dummy-Bearer" DB für eine mögliche Synchronisation in Frage. Somit muss nicht nur eine Verbindung gefunden werden, sie muss auch dahingehend überprüft werden, ob die Aussendung von der gewünschten Basisstation BS stammt. Zusätzlich werden auf dem "Dummy-Bearer" DB Informationen gesendet, die zum Betrieb des Mobilteils wichtig sind, wie z.B. verfügbare Dienste, Verschlüsselung, verfügbare Frequenzen usw. Nachdem es die Basis gefunden hat, benötigt das Mobilteil etwa weitere 500ms, um alle benötigten Informationen über das System zu sammeln, die für einen Verbindungsaufbau notwendig sind.

Die hierfür benötigte Zeit ist nicht akzeptabel, wenn der asynchrone Zustand der Regefall in einem Ruhezustand wird. Vor jedem Gespräch müsste jetzt die Synchronisierung abgewartet werden, was bei den herkömmlichen Vorrichtungen und Verfahren zu lange dauert.

Ein weiterer Grund ist die Standby-Zeit eines Mobilteils. Einem asynchronen Mobilteil MT ist zunächst nicht bekannt, wo in dem Zeit/Frequenz-Raster nach Figur 2 die Basisstation BS Kontakt mit ihm aufnehmen wird. Um den "Dummy-Bearer" DB zu finden, muss das Mobilteil permanent den gesamten Signalraum mit seinem Empfänger abtasten. Das lässt aber der Energievorrat im Akkumulator nur eine sehr kurze Zeit zu. Bisherige Standby-Zeiten von mehreren Tagen sind damit ausgeschlossen, da mit ständig eingeschaltetem Empfänger die Ladung im Akku nur wenige Stunden reicht. Derzeit gibt es in herkömmlichen Mobilteilen und/oder Basisstationen z.B. vom Typ "Gigaset" drei verschiedene "power-down-modes":

### "Green DECT-Mode":

Unter bestimmten Umständen reduziert die Basisstation BS ihre Sendeleistung auf einen niedrigeren Wert, ebenso werden die "receiver-scanning-slots" auf einen niedrigen Wert reduziert.

Die Hauptintention für diesen Betriebsmodus war eine generelle Absenkung des netzseitigen Energieverbrauchs der Basisstation. Die geringere Sendeleistung war hier eher ein willkommenes Abfallprodukt, wurde aber nicht explizit beworben. Die Sendeleistungsabsenkung kam nur zum Tragen, wenn bestimmte Anforderungen erfüllt waren:
- Genau ein Mobilteil ist an der Basisstation angemeldet.
- Genau dieses Mobilteil befindet sich in der Ladeschale und hat sich erfolgreich über die Ladekontakte bei der Basisstation identifiziert.

Daher ist dieser Modus nur bei Basisstationen mit Ladeschale anwendbar.

### "Eco-Mode":

Dies ist eine statische Einstellung, bei der die Sendeleistung systemweit abgesenkt wird (Basisstation und Mobilteil/Mobilteile). Der Benutzer aktiviert diese Einstellung per Menü und sie gilt fortan permanent. Auch bei schlechter Verbindung wird die Sendeleistung dann nicht mehr angehoben. Der "Eco-Mode"-Zustand wird im Display angezeigt.

Die Modi "Eco-Mode" und "Green-DECT-Mode" können unabhängig kombiniert genutzt werden. Beim "Green-DECT-Mode" kann hierbei eine etwas tiefere Absenkung der Sendeleistung als beim "Eco-Mode" gewählt werden.

### Niedrige Sendeleistung im Mobilteil:

In jüngster Zeit existieren herkömmliche Mobilteile z.B. vom Typ "GIGASET 2000C", wobei die Mobilteile anhand einer Empfangsgüte und Signalfeldstärke entscheiden, ob die Sendeleistung abgesenkt werden kann. Die Absenkung erfolgt dann nur im Mobilteil, jedoch nicht in der Basisstation. Das Zurückschalten auf hohe Sendeleistung ist während eines Gesprächs möglich und wird technisch durch ein "Handover" durchgeführt. Zu Beginn einer Verbindung wird mit hoher Sendeleistung gearbeitet.

Es ist darüber hinaus auch bekannt, dass die Basisstation einen in der Leistung abgesenkten "Dummy-Bearer" aussendet. Damit wird aber das eigentliche Problem nicht gelöst, nämlich in den Ruhezeiten, z.B. nachts ganz auf einen Synchronisationspuls bzw. "Dummy-Bearer" zu verzichten. Derzeitige Lösungen funktionieren nur dann, wenn nur ein einziges Mobilteil an das System angemeldet ist und dieses sich, wie bereits beschrieben, auch noch in der Ladeschale der Basisstation befindet.

Die Europäische Patentanmeldung EP 1 061 718 A offenbart eine Basisstation für ein mobiles Telefon-Handgerät. Diese hat einen Normalbetriebszustand, in dem sie ein Synchronisationssignal für das Handgerät aussendet, und einen Ruhezustand, in dem sie das Synchronisationssignal nicht sendet. Die Basisstation ist in der Lage, den Ruhezustand einzunehmen, wenn ein Sensor die Anwesenheit des Handgerätes an der Basisstation erfasst.

Die internationale Patentanmeldung WO02/073848A offenbart ein Verfahren und eine Vorrichtung zur Frame-Synchronisation bei der digitalen Datenübermittlung. Hier wird ein Synchronisationswort ausgewählt in welchem sowohl Datenverkehrsbits als auch Kontrollbits nach einem für aufeinanderfolgende Frames festgelegten Muster enthalten sind. Hierbei wird die Position des Synchronisationswortes von Frame zu Frame variiert. Auch die enthaltenen Datenverkehrsbits und Kontrollbits variieren wesentlich zwischen aufeinanderfolgenden Frames.

Der Erfindung liegt daher die Aufgabe zu Grunde, Vorrichtungen und Verfahren zur Steuerung des Aufbaus einer Nutzkanalverbindung in einem Kommunikationssystem sowie ein zugehöriges Kommunikationssystem, digitales Speichermedium, Computer-Programm-Produkt und Computerprogramm anzugeben, bei dem eine Nutzkanalverbindung auf einen von dem Mobilteil oder der Basisstation angezeigten Verbindungswunsch zwecks Übertragung von Nutzdaten schnell aufgebaut wird und zugleich im Ruhezustand keine Synchronisationspulse gesendet werden. Erfindungsgemäß wird diese Aufgabe hinsichtlich der Vorrichtungen durch die Merkmale der Patentansprüche 1 und 15, hinsichtlich der Verfahren durch die Maßnahmen der Patentansprüche 8 und 27, hinsichtlich des Kommunikationssystems durch den Patentanspruch 43, hinsichtlich des digitalen Speichermediums durch den Patentanspruch 44, hinsichtlich des Computer-Programm-Produkts durch den Patentanspruch 45 und hinsichtlich des Computerprogramms durch den Patentanspruch 46 gelöst.

Insbesondere durch die Verwendung einer Auswerteeinheit zum Auswerten eines Synchronisationspulses mit einer erweiterten Synchronisationsinformation, die eine Positionsinformation des Synchronisationspulses innerhalb des Zeitrahmens angibt und der Auswertung der Positionsinformation sowie einer Ansteuerung einer Sendeeinheit zum Aufbauen einer synchronen Nutzkanalverbindung entsprechend dem Auswerteergebnis, kann ein schneller Aufbau einer Nutzkanalverbindung aus einem asynchronen Ruhezustand realisiert werden.

Ferner kann ein schneller Weckvorgang durch eine Auswerteeinheit realisiert werden, die als Auswerteergebnis eine Synchronisierungsanforderung ausgibt, wenn ein lokaler Verbindungswunsch besteht oder die Empfangseinheit zumindest einen Abfragepuls pro Zeitrahmen empfängt, wobei der Abfragepuls keine erweiterten Synchronisationsinformationen enthält, und die Steuereinheit ihrerseits die Sendeeinheit zum Senden von zumindest zwei Synchronisationspulsen pro Zeitrahmen ansteuert. Eine derartige Wecksignalerkennung wird vorzugsweise in Basisstationen realisiert, obwohl sie grundsätzlich auch in Mobilteilen realisiert werden kann.

Die der Erfindung zu Grunde liegende Idee besteht folglich darin, dass zum Aufbau einer synchronen Nutzkanalverbindung aus einem asynchronen Ruhezustand heraus ein initiierendes Gerät eines Kommunikationssystems (z.B. bei eingehendem Ruf: Basisstation/Festteil; bei abgehendem Ruf: Mobilteil) auf allen zur Verfügung stehenden physikalischen Ressourcen (z.B. im Frequenz-Zeitbereich auf allen Frequenzen und zu allen möglichen Zeitpunkten) Synchronisationspulse sendet. Dieses schließt beispielsweise auch mehrere Pulse innerhalb eines Zeitschlitzes, der vorzugsweise Sendezeitschlitz und Empfangszeitschlitz sein kann, mit ein. Auf Grund der Vielzahl der gesendeten, zur Verfügung stehenden Synchronisationspulse ist eine schnelle Synchronisation gewährleistet, da sich dadurch die Wahrscheinlichkeit ausreichend erhöht, dass ein Puls in das Suchfenster eines Empfängers fällt. Weiterhin lassen sich vorzugsweise innerhalb eines DECT-Systems eine oder mehrere Vorzugsfrequenzen zum Verbindungsaufbau verabreden, die z.B. aus einer Kennung der Basisstation wie z.B. der Radio Fixed Part Identity (RFPI), abgeleitet werden können.

Dies hat den Vorteil, dass während Ruhezeiten nicht gesendet wird, sondern nur zum Zeitpunkt eines Verbindungsaufbaus zur Übertragung von Nutzdaten, es keine Reichweiteneinschränkung gibt, die Anzahl der Mobilteile am System nicht eingeschränkt ist, kein permanenter Betrieb der Empfangseinrichtung (Receiver) im Mobilteil notwendig ist (Erhöhung der Standby-Zeit) es kurze Synchronisationszeiten gibt und ein kompatibler Modus zu bisherigen Systemen, die z.B. nach dem DECT-Standard funktionieren, möglich ist.

In den weiteren Unteransprüchen sind weitere vorteilhafte Ausgestaltungen der Erfindung gekennzeichnet.

Die Erfindung wird nachfolgen anhand von Ausführungsbeispiel unter Bezugnahme auf die Zeichnung näher beschrieben.

Es zeigen:
Figur 1 eine vereinfachte Blockdarstellung eines herkömmlichen Kommunikationssystems mit drahtloser Schnittstelle;
Figur 2 eine vereinfachte Darstellung zur Veranschaulichung von belegten Kanälen und Dummy-Bearern in einem Zeit-/Frequenzbereich gemäß dem Stand der Technik;
Figur 3 eine vereinfachte Darstellung einer Vorrichtung zur Steuerung des Aufbaus einer Nutzkanalverbindung, wie sie in einem Mobilteil und in einer Basisstation realisiert sein kann;
Figur 4 eine vereinfachte Darstellung eines Zeit-/Frequenzbereichs gemäß einem ersten Ausführungsbeispiel;
Figur 5 eine vereinfachte Darstellung eines Zeit-/Frequenzbereichs gemäß einem zweiten Ausführungsbeispiel;
Figuren 6A und 6B vereinfachte Darstellungen von Zeit-/Frequenzbereichen gemäß einem dritten Ausführungsbeispiel;
Figur 7 eine vereinfachte Darstellung eines Zeit-/Frequenzbereichs gemäß einem vierten Ausführungsbeispiel;
Figur 8 eine vereinfachte Darstellung eines Zeit-/Frequenzbereichs gemäß einem fünften Ausführungsbeispiel;
Figur 9 eine vereinfachte Darstellung eines Zeit-/Frequenzbereichs gemäß einem sechsten Ausführungsbeispiel;
Figur 10 eine vereinfachte Darstellung eines Zeit-/Frequenzbereichs gemäß einem siebten Ausführungsbeispiel;
Figuren 11A bis 11C Detaildarstellungen von erfindungsgemäßen Synchronisationsformaten;
Figuren 11D bis 11F vereinfachte Darstellungen von Figuren 11A bis 11C;
Figur 12 eine vereinfachte Darstellung eines Empfangszeitfensters einer Basisstation mit enthaltenem Abfragepuls einer Mobilstation;
Figur 13A ein vereinfachtes Zustandsdiagramm zur Veranschaulichung einer Aktivierung eines Ruhezustands;
Figur 13B ein vereinfachtes Zustandsdiagramm zur Veranschaulichung eines Ruhezustand-Abbruchs durch ein Mobilteil;
Figur 13C ein vereinfachtes Zustandsdiagramm zur Veranschaulichung eines Ruhezustand-Abbruchs durch eine Basisstation;
Figur 14 ein vereinfachtes Zustandsdiagramm zur Veranschaulichung eines Synchronisationsvorgangs durch die Basisstation; und
Figur 15 ein vereinfachtes Zustandsdiagramm zur Veranschaulichung eines Synchronisationsvorgangs durch ein Mobilteil.

Die vorliegende Erfindung richtet sich auf Vorrichtungen und Verfahren zur Realisierung eines digitalen Kommunikationssystems, das die permanente Aussendung gepulster Strahlung in Form eines periodischen "Dummy-Bearers" DB zur Synchronisation in einem Ruhezustand nicht aufweist. Ruhezustand bedeutet dabei, dass keine Nutzdaten (Sprach- und/oder Paketdaten) zu und von den Mobilteilen über das Festteil bzw. die Basisstation gesendet werden.

Die vorliegende Erfindung wird nachfolgend beispielhaft anhand eines DECT-Kommunikationssystems beschrieben. Wird in einem derartigen DECT-System der "Dummy-Bearer" DB abgeschaltet, so ist die kurzfristige Reaktion, d.h. eine Reaktionszeit tᵣ < 1s, eines Mobilteils zum Beispiel auf einen ein-oder abgehenden Anruf nicht gegeben. Ein Mobilteil benötigt aus dem asynchronen Zustand heraus zu lange (ca. 10 Sekunden), um sich auf die Basisstation zu synchronisieren.

Die vorliegende Erfindung ermöglicht eine schnelle Synchronisation für ein TDMA-System (Time Division Multiple Access) wie beispielsweise DECT, das sich mit vorhandenen technischen Mitteln unter weitgehender Beachtung des bisherigen Standards (zum Beispiel Berücksichtigung belegter Kanäle) realisieren lässt. Ein periodischer, andauernd gesendeter "Dummy-Bearer" DB wird hierbei insbesondere im Ruhezustand vermieden, ebenso ein andauernder Betrieb des Empfängers in den Mobilteilen, weshalb Sendeenergie nur zum gezielten Verbindungsaufbau und für Übertragungen verwendet wird.

Figur 3 zeigt eine vereinfachte Blockdarstellung einer Vorrichtung zur Steuerung des Aufbaus einer Nutzkanalverbindung, wie sie in einem Kommunikationssystem sowohl in einem Mobilteil MT als auch in einer Basisstation BS realisiert sein kann. Die Vorrichtung 10 besteht gemäß Figur 3 aus einer Empfangseinheit 1 zum Empfangen von Eingangssignalen SB oder AP auf der drahtlosen Schnittstelle bzw. Luftschnittstelle des Kommunikationssystems, welches vorzugsweise nach dem DECT-Standard spezifiziert ist. Die Eingangssignale können insbesondere einen Synchronisationspuls SB oder einen Abfragepuls AP aufweisen. Eine Auswerteeinheit dient dem Erkennen und Auswerten der von der Empfangseinheit 1 empfangenen Eingangssignale zum Erzeugen eines entsprechenden Auswerteergebnisses AE. Das Auswerteergebnis AE wird einer Steuereinheit 4 zugeführt, die zum Steuern der Sendeeinheit 3 in Abhängigkeit vom Auswerteergebnis AE ausgelegt ist.

Erfindungsgemäß kann die Auswerteeinheit 2 z.B. den über die Empfangseinheit 1 empfangenen Synchronisationspuls SB erkennen, welcher eine erweiterte Synchronisationsinformation XSync aufweist, die eine Positionsinformation S des Synchronisationspulses SB innerhalb des Zeitrahmens FR angibt und wertet die Positionsinformation S aus. Die Steuereinheit 4 kann daraufhin die Sendeeinheit 3 entsprechend dem Auswerteergebnis AE bzw. der ausgewerteten Positionsinformation derart ansteuern, dass eine synchrone Nutzkanalverbindung mit einer Gegenstelle (z.B. Mobilteil oder Basisstation) aufgebaut werden kann.

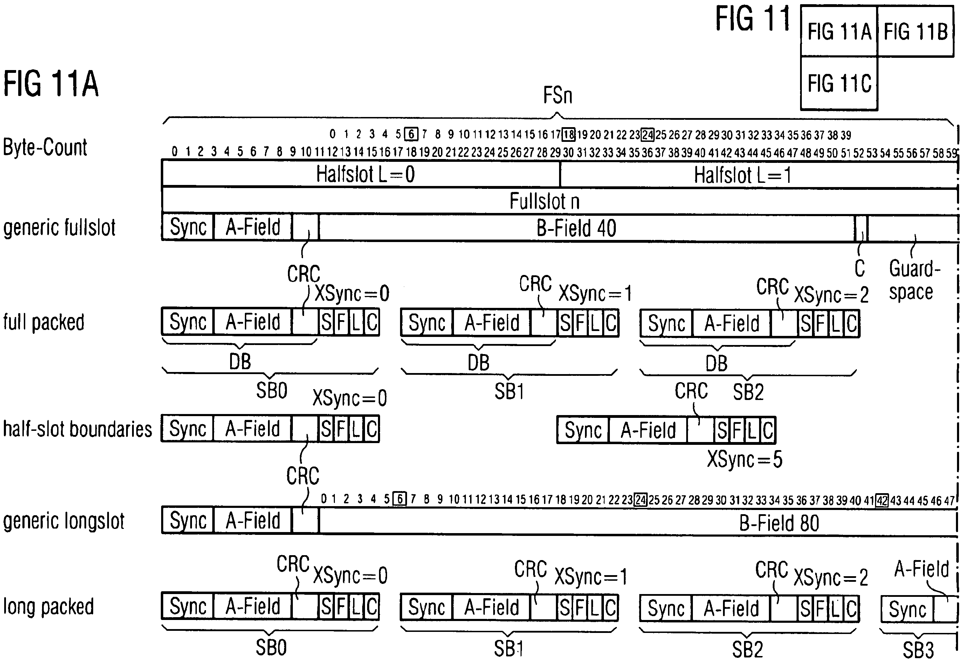

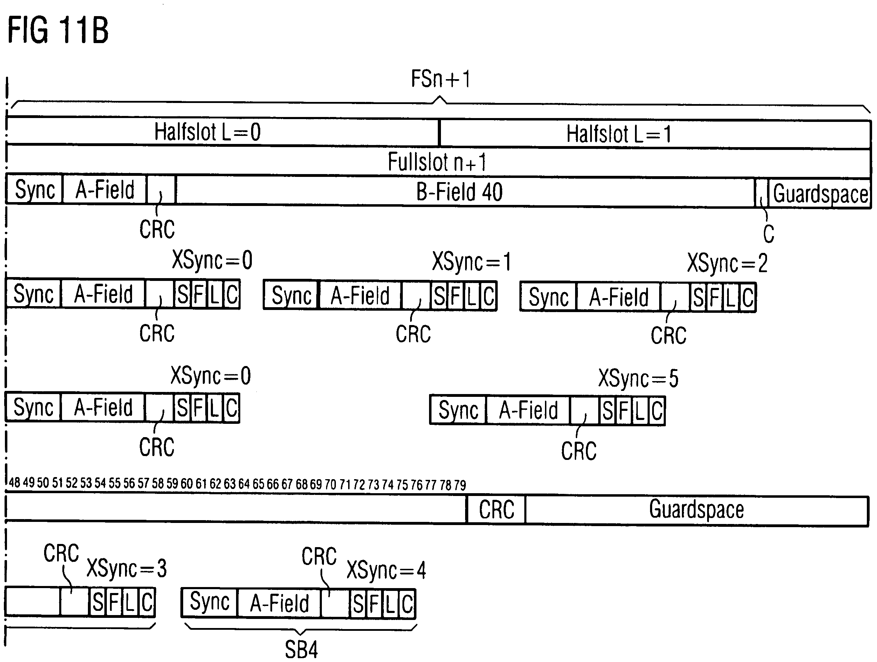

Figuren 11A und 11B zeigt eine detaillierte Darstellung eines Rahmenaufbaus für entsprechende an der Empfangseinheit 1 empfangene Eingangssignale. Hierbei besteht ein Synchronisationspuls SB mit erweiterter Synchronisationsinformation XSync beispielsweise aus einem herkömmlichen Dummy-Bearer DB mit einem Synchronisationsfeld SYNC, einem A-Feld und einem CRC-Feld. Die erweiterte Synchronisationsinformation XSync weist hierbei eine Positionsinformation S, eine Scramblerinformation F, eine Dummy-Bearer-Information L und eine Checksumme C auf.

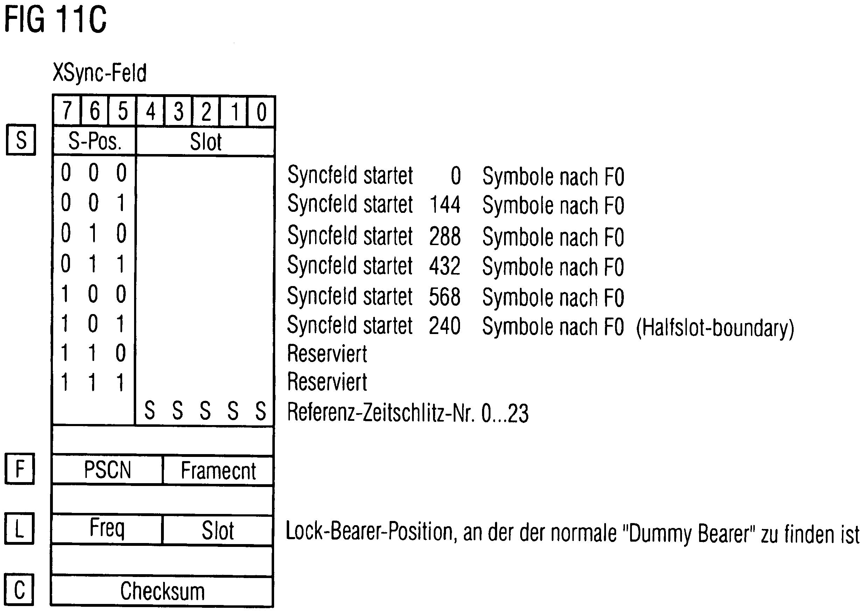

Die Positionsinformation S enthält gemäß Figur 11C drei Bits zur Definition des Synchronisationspuls SB innerhalb eines Zeitschlitzes FS sowie eine zusätzliche Zeitschlitzinformation slot, welche eine jeweilige Zeitschlitznummer angibt, in der sich der Synchronisationspuls SB befindet. Durch Auswerten dieser Positionsinformation S kann somit eindeutig die Position des Synchronisationspulses SB innerhalb eines Zeitrahmens FR berechnet und somit beim nächstmöglichen Zeitpunkt eine synchrone Nutzkanalverbindung über die drahtlose Schnittstelle realisiert werden.

Die optionale Scramblerinformation F weist beispielsweise eine Sendefrequenzinformation PSCN auf, die angibt, welche Frequenz augenblicklich von einer Basisstation verwendet wird sowie einen zugehörigen Rahmenzähler Framecnt, der einen entsprechenden Rahmen angibt. Da die Daten üblicherweise verwürfelt bzw. gescrambelt übertragen werden, kann mit einer derartigen Scramblerinformation F ein gescrambeltes Datum zuverlässig entscrambelt werden.

Ferner kann die erweiterte Synchronisationsinformation XSync eine Dummy-Bearer-Information L mit einer Frequenzangabe frec und einer Zeitschlitzangabe slot ausgewertet werden, welche angeben, wo in einem Zeit-/Frequenzbereich ein normaler "Dummy-Bearer" DB augenblicklich zu finden ist.

Auf diese Weise kann ein Übergang von einem asynchronen Ruhezustand in eine synchrone Nutzkanalverbindung sehr schnell realisiert werden.

Die vorstehend beschriebene Vorrichtung bzw. das zugehörige Verfahren kann sowohl in einer Basisstation BS als auch in einem Mobilteil MT implementiert werden.

Alternativ kann auch ein Synchronisationspuls SB ohne erweiterte Synchronisationsinformation XSync als Abfragepuls AP bzw. Wecksignal verwendet werden, wobei eine derartige Realisierung vorzugsweise in einer Basisstation BS stattfindet. Gemäß Figur 3 wird die Auswerteeinheit 2 demzufolge eine Synchronisierungsanforderung als Auswerteergebnis AE an die Steuereinheit 4 ausgeben, wenn entweder ein lokaler Verbindungswunsch LV an der Basisstation BS besteht oder die Empfangseinheit 1 zumindest einen Abfragepuls AP, der beispielsweise einem verstümmelten Synchronisationspuls SB ohne erweiterte Synchronisationsinformation XSync entspricht, pro Zeitrahmen FR empfängt. In diesem Fall steuert die Steuereinheit 4 die Sendeeinheit 3 derart an, dass anschließend zumindest zwei Synchronisationspulse SB, wie in Figuren 11A bis 11E dargestellt, pro Zeitrahmen FR über die drahtlose Schnittstelle gesendet werden. Damit kann insbesondere ein Mobilteil MT auf einfache Weise eine Basisstation BS aufwecken und in kurzer Zeit mit Synchronisationspulsen SB für eine schnelle Synchronisation versorgt werden.

Obwohl diese Realisierungsform vorzugsweise in einer Basisstation implementiert ist, kann sie grundsätzlich auch in einem Mobilteil implementiert sein, wobei sich die Basisstation zunächst auf das Mobilteil aufsynchronisieren würde.

Nachfolgend erfolgt die grundsätzliche Erläuterung des erfindungsgemäßen schnellen Synchronisationsverfahrens, wie es beispielsweise als schnelles DECT-Synchronisationsverfahren realisiert werden kann.

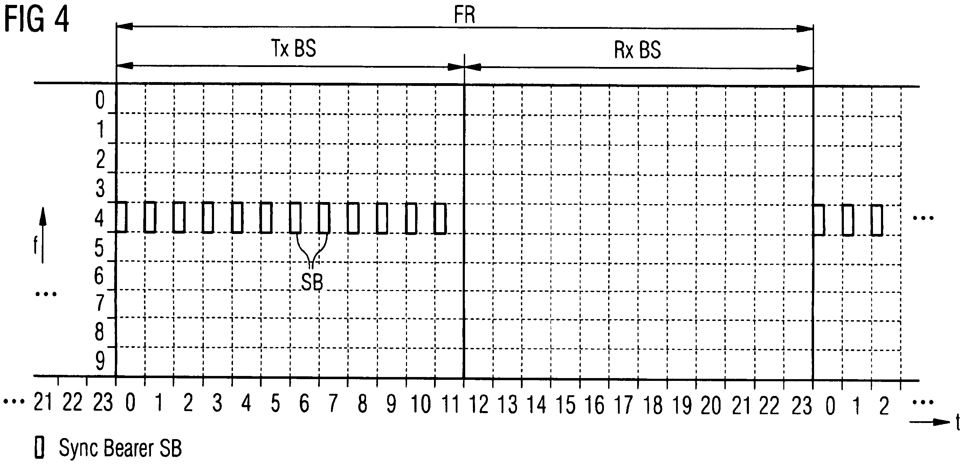

Figur 4 zeigt eine vereinfachte Darstellung eines Zeit-/Frequenzbereichs zur Veranschaulichung einer schnellen Synchronisierung gemäß einem ersten Ausführungsbeispiel, wobei gleiche Bezugszeichen gleiche Elemente definieren wie in Figur 2, weshalb auf eine wiederholte Beschreibung nachfolgend verzichtet wird.

Beispielsweise wird davon ausgegangen, dass die Basisstation BS das Mobilteil MT synchronisiert. Erfindungsgemäß befindet sich das Mobilteil MT zunächst im asynchronen Ruhezustand, wobei es, wie bisher im synchronen Zustand, seinen Empfänger bzw. seine Empfangseinheit 1 nur alle 640 Millisekunden einschaltet. Bei einem gewünschten Verbindungsaufbau sendet die Basisstation BS nunmehr nicht nur einen einzigen "Dummy-Bearer" DB je Zeitrahmen FR, sondern, wie in Figur 4 verdeutlicht ist, so viele wie es ihr eben möglich ist. Gemäß Figur 4 wird beispielsweise auf der Frequenz f=4 somit in jedem Sendezeitschlitz TX_BS der Basisstation ein "Dummy-Bearer" als Synchronisationspuls SB gesendet. Die übrigen freien Stellen im Zeit-/Frequenzbereich können üblicherweise nicht verwendet werden, da ein Gerät in der Regel immer nur einen Synthesizer besitzt und deshalb nicht zwei unterschiedliche Frequenzen zur gleichen Zeit einschalten kann.

Bei dem in Figur 4 vorgeschlagenen Ausführungsbeispiel wird bisher zwar jeder Sendezeitschlitz FS0 bis FS11 genutzt, aber nur eine von 10 möglichen Frequenzen (f=4). Damit sich die Basisstation BS und das Mobilteil MT in diesem Fall nicht auf unterschiedlichen Frequenzen zu lange verpassen, kann vorzugsweise eine Vorzugsfrequenz innerhalb eines Kommunikationssystems verabredet werden. Im Gegensatz zu einem festgelegten Service-Kanal kann jede der 10 Frequenzen von einer Basisstation als Vorzugsfrequenz ausgewählt werden. Dazu kommen sowohl Zufallsalgorithmen z.B. auf der Basisstation der für jede Basisstation unterschiedlichen RFPI (Radio Fixed Part Identification) als auch Messungen der aktuellen Kanalbelegung anhand des RSSI-Signals (Received Signal Strength Indication) der Basisstation in Frage.

Auf dieser verabredeten Vorzugsfrequenz werden dann die Synchronisationspulse SB ausgesendet. Schaltet ein Mobilteil seine Empfangseinheit 1 ein, findet es unmittelbar einen verwertbaren Synchronisationspuls SB und kann im nachfolgenden Empfangs-Zeitschlitz RX_BS der Basisstation die Verbindung aufnehmen. In Figur 4 ist die Vorzugsfrequenz f zum Beispiel f=4.

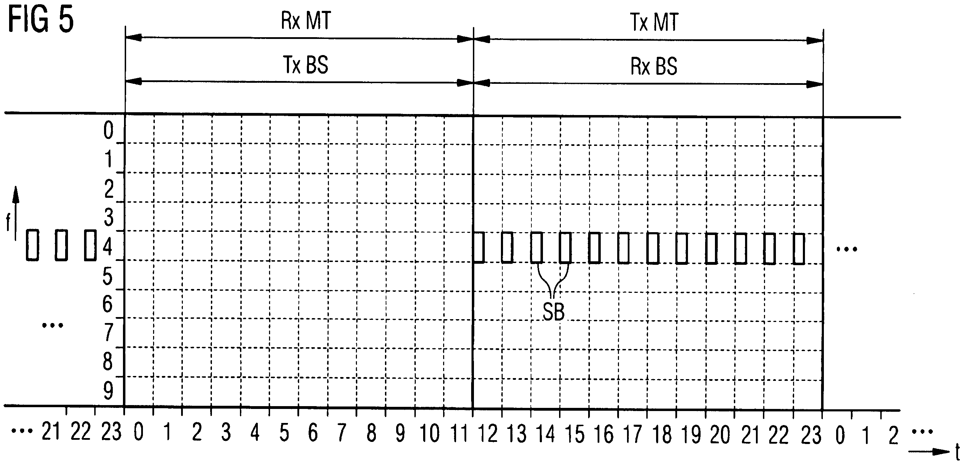

Figur 5 zeigt eine vereinfachte Darstellung eines Zeit-/Frequenzbereichs zur Realisierung einer schnellen Synchronisation gemäß einem zweiten Ausführungsbeispiel. Gemäß Figur 5 kann auch das Mobilteil MT die Basisstation BS synchronisieren. Ein wesentlicher Unterschied zum Ausführungsbeispiel gemäß Figur 4 liegt darin, dass sich nicht nur das Mobilteil auf die Basisstation, sondern auch die Basisstation auf das Mobilteil synchronisieren kann. Dieser Fall kann sich immer dann ergeben, wenn von einem asynchronen Mobilteil MT aus ein Anruf abgesetzt werden soll. Beispielsweise beginnt das Mobilteil, so viele Synchronisationspulse SB oder Abfragepulse AP innerhalb eines Zeitrahmens FR zu erzeugen, wie es ihm von seiner Systemauslegung her möglich ist. Die Basisstation, die sich zunächst ebenfalls asynchron in Ruhe befinden kann, schaltet periodisch, ähnlich wie ein Mobilteil im ersten Ausführungsbeispiel, seine Empfangseinheit 1 ein. Abweichend dazu kann eine Basisstation BS auch ständig ihre Empfangseinheit eingeschaltet lassen, da sie in der Regel aus dem Stromnetz versorgt wird und somit nicht der Energiebeschränkung eines Mobilteils unterliegt.

Für das Mobilteil MT ergibt sich das gleiche Sendeschema wie für die Basisstation BS in Figur 4. Die Basisstation BS erkennt den Verbindungswunsch und synchronisiert sich entweder auf die Synchronisationspulse SB des Mobilteils auf oder sendet bei Empfang von Abfragepulsen AP ihrerseits Synchronisationspulse SB. Die so gefundene Synchronisierung kann beibehalten werden. Alternativ dazu kann die Basisstation aber auch das Mobilteil gezielt in eine eigene Synchronisierung überleiten, falls sie mehr als eine Verbindung zu weiteren Mobilteilen halten muss.

Da sich aufgrund der Dualität eines Verbindungsaufbaus zwischen Basisstation und Mobilteil kaum Unterschiede ergeben, wird im Folgenden nur die Synchronisierung des Mobilteils auf die Basisstation ausführlich dargestellt. Auf mögliche Abweichungen (z.B. Basisstation am Stromnetz) wird gesondert hingewiesen.

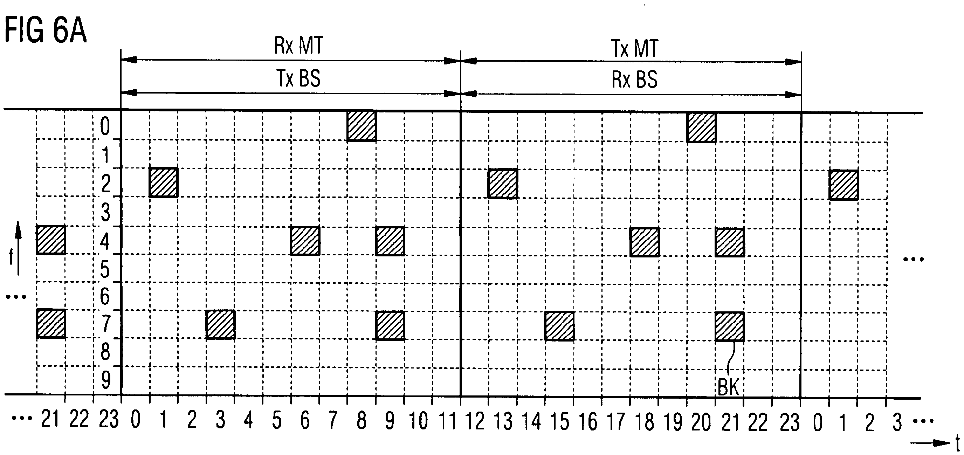

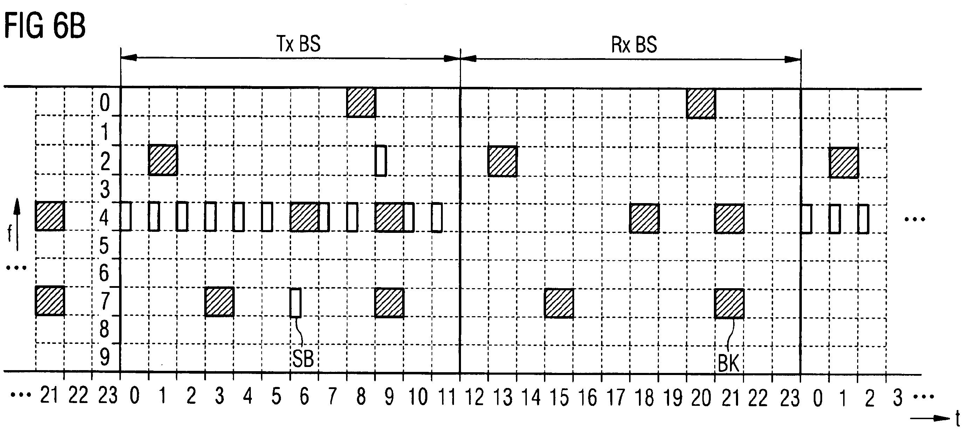

Figuren 6A und 6B zeigen vereinfachte Darstellungen von Zeit-/Frequenzbereichen zur Veranschaulichung einer schnellen Synchronisation gemäß einem dritten Ausführungsbeispiel. In den vorstehenden Ausführungsbeispielen wurde bisher von einem Kommunikationssystem ausgegangen, in dessen Reichweite sich kein weiteres Kommunikationssystem befindet(z.B. ein weiteres DECT-System). Existieren weitere Kommunikationssysteme, können ein oder mehrere Zeitschlitze FS insbesondere auch auf der gewählten Vorzugsfrequenz f=4 belegt sein. In Figur 6A sind beispielsweise in der Vorzugsfrequenz f=4 die Zeitschlitze 6, 9 sowie 18 und 21 durch belegte Kanäle BK blockiert. Die Kanalbelegung kann das die Verbindung aufbauende Gerät beispielsweise anhand von RSSI-Messungen bestimmen. Je Kanalbelegung kann dabei unmittelbar vor einem Verbindungsaufbau ermittelt werden. Vorzugsweise kann die Basisstation auf Grund ihrer Stromnetzversorgung ständig messen.

Während der von anderen Kommunikationssystemen belegten Zeit kann das synchronisierende System auf andere Frequenzen ausweichen. Dies ist in Figur 6B dargestellt. Erst bei Belegung auch der ersten Ausweichfrequenz kann eine beliebige dritte Frequenz ausgewählt werden. Alternativ ist eine Fortführung der Rangfolge der Ausweichfrequenzen. In Figur 6B wird beispielsweise eine Verbindung zunächst auf der Vorzugsfrequenz f=4 begonnen. Die Zeitschlitze 6 und 9 sind jedoch bereits belegt. Daher erfolgt ein Ausweichen in Zeitschlitz 6 mit dem Synchronisationspuls SB auf eine erste Ausweichfrequenz f=7. In Zeitschlitz 9 sind sowohl die Vorzugsfrequenz f=4 als auch die erste Ausweichfrequenz f=7 belegt. Daher erfolgt ein Ausweichen auf eine zweite Ausweichfrequenz f=2.

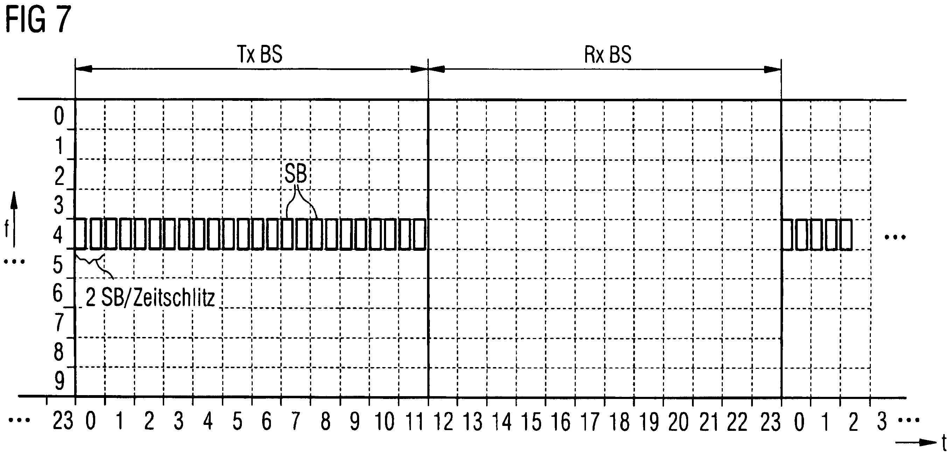

Figur 7 zeigt eine vereinfachte Darstellung eines vereinfachten Zeit-/Frequenzbereichs zur Veranschaulichung einer schnellen Synchronisation gemäß einem vierten Ausführungsbeispiel. Die Dauer der Aussendung eines Synchronisationspulses SB dauert beispielsweise ca. 96 Mikrosekunden. Dieses ist nur ein Bruchteil der Sendedauer eines "DECT-Bursts" (DECT-Sendepuls von ca. 368 Mikrosekunden). Damit lassen sich mindestens zwei Synchronisationspulse SB in einem Zeitschlitz FS aussenden. Gemäß Figur 7 können demzufolge auch zwei oder mehr Synchronisationspulse SB pro Zeitschlitz FS vorgesehen werden. Die Dichte der Synchronisationspulse SB erhöht sich damit deutlich. So steigt die Wahrscheinlichkeit noch einmal, dass ein asynchrones Gerät (Mobilteil oder Basisstation) unmittelbar einen verwertbaren Synchronisationspuls SB findet.

Bei dem Ausführungsbeispiel gemäß Figur 7 kann der zweite Synchronisationspuls als solcher gekennzeichnet werden, damit das empfangende Gerät die richtige Position des Synchronisationsrasters errechnen kann. In Figur 7 werden beide Synchronisationspulse auf der gleichen Frequenz gesendet. Der zweite Synchronisationspuls kann aber auch auf einer anderen Frequenz ausgesendet werden. Wird die derzeitige Burstmaske des DECT-Standards dabei eingehalten, so stehen dem Synthesizer für einen Wechsel etwa 122 Mikrosekunden Einschwingzeit zur Verfügung.

Beispielsweise können rein rechnerisch in einen Zeitschlitz mit 480 Bit Länge genau 5 "Dummy-Bearer" DB mit der Länge von 96 Bit eingefügt werden. Realistisch sind jedoch lediglich 4 Synchronisationspulse, da noch Hochlaufzeiten (Ramping Time, Guard Space) für den Poweramplifier am Anfang und am Ende berücksichtigt werden müssen.

Da bei einer solch engen Belegung mit beispielsweise 4 Synchronisationspulsen kein Frequenzwechsel möglich ist, entfallen auch die Hochlaufzeiten zwischen den z.B. vier Synchronisationspulsen. Ein solcher "Burst" unterscheidet sich von einem normalen "DECT-Burst" nur durch seine spezielle Modulation.

Die unterschiedlichen Synchronisationszeiten erfordern daher eventuell eine spezielle Behandlung. Diese kann folgendermaßen aussehen:
a) Die Synchronisationspulse SB1 bis SB4 erhalten einen Zeitschlitzzähler. Dann erfolgt die Synchronisation auf das normale DECT-Raster.
b) Die sowieso asynchrone Gegenstelle übernimmt die Phase des gefundenen "Dummy-Bearer" DB.
c) In einen Synchronisationspuls SB wird mehr Information hineingepackt. Hier muss in der MAC-Ebene des DECT-Protokollstapels bestimmt werden, welche Informationen hier benötigt werden.

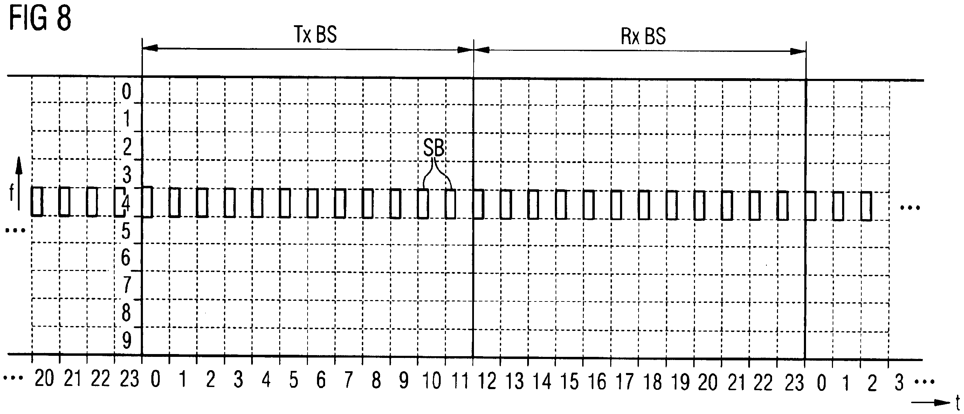

Figur 8 zeigt eine vereinfachte Darstellung eines Zeit-/Frequenzbereichs zur Veranschaulichung einer schnellen Synchronisation gemäß einem fünften Ausführungsbeispiel. Ein asynchrones, in Ruhe befindliches Mobilteil schaltet seinen Empfänger beispielsweise nur alle 640 Millisekunden ein. Es vergehen also im Mittel 320 Millisekunden, im schlechtesten Fall 640 Millisekunden, bis ein Mobilteil MT überhaupt etwas empfängt. Während dieser Zeit ist natürlich auch nicht mit einer Antwort auf die Synchronisationsanforderung zu rechnen. Der RX-Zeitraum eines Zeitrahmens FR kann daher für weitere Synchronisationspulse genutzt werden. Das erhöht die Wahrscheinlichkeit, dass ein asynchrones Gerät sofort einen verwertbaren Synchronisationspuls antrifft. Gemäß Figur 8 ist diese Realisierung für eine Basisstation BS dargestellt. Für ein Mobilteil gilt das natürlich sinngemäß auch, nur sind die TX-und RX-Phasen innerhalb des Zeitrahmens getauscht.

Zumindest ein Synchronisationspuls SB kann gemäß Figur 8 von einem Gerät mit Verbindungswunsch 640 Millisekunden lang in jedem freien, verfügbaren Zeitschlitz FS gesendet werden. Da in diesem Fall die übliche RX-Phase je 5 Millisekunden später wegfällt, sind die Synchronisationspulse SB in ihrem Datenteil entsprechend zu kennzeichnen. Eine Möglichkeit ist hier wiederum ein Zähler, der die noch verbleibende Anzahl von Synchronisationspulsen bis zum ersten angebotenen RX-Teilframe anzeigt. Ein asynchrones Gerät kann damit sofort einen nutzbaren Synchronisationspuls SB finden. Es kann sich daran synchronisieren und wertet den Zählerstand aus. Nach Ablauf der 640 Millisekunden kann ein dann synchrones Gerät sofort die Verbindung aufnehmen.

Damit ist außerdem sichergestellt, dass alle Geräte eines Systems die Gelegenheit haben, während der Synchronisierungsphase sofort auf einen Synchronisationspuls zu treffen. Damit wird das Verfahren unabhängig von der Phase, in der sich ein asynchrones Gerät gerade in seinem 640 Millisekundenzyklus befindet. Im Mobilteil kann dieser Zyklus beispielsweise auch 1280ms aufweisen. Ohne diesen Zähler kann alternativ einfach der Übergang zum normalen Zeitrahmen FR abgewartet werden. Die einzelnen hier genannten Möglichkeiten lassen sich selbstverständlich auch kombinieren.

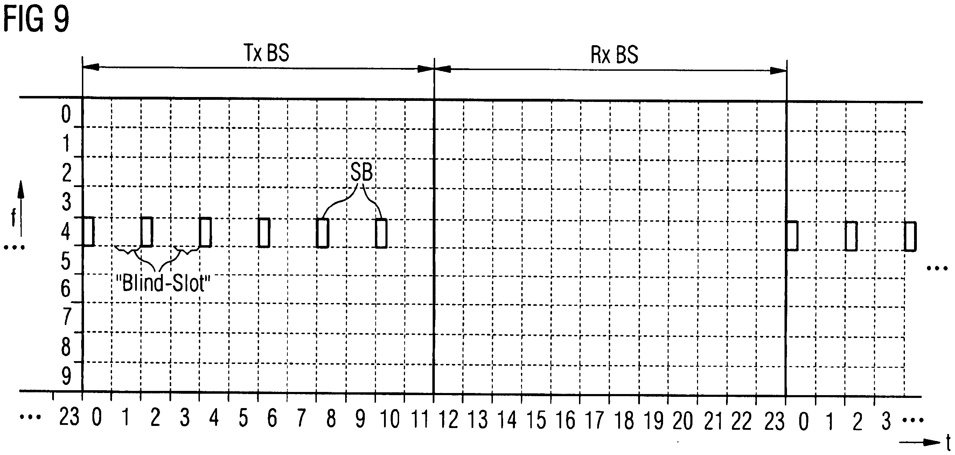

Figur 9 zeigt eine vereinfachte Darstellung eines Zeit-/Frequenzbereichs zur Veranschaulichung einer schnellen Synchronisation gemäß einem sechsten Ausführungsbeispiel. Bisher wurde davon ausgegangen, dass ein Gerät jeden Zeitschlitz FS nutzen kann. Bei Geräten mit langsamem Synthesizer ist das jedoch nicht der Fall. Für jeden aktiven RX- oder TX-Zeitschlitz kann demzufolge der vorhergehende Zeitschlitz benötigt werden, um den Synthesizer auf die gewünschte Frequenz einschwingen zu lassen. Dieser Vorbereitungszeitschlitz wird "Blind-Slot" genannt. Hier kann das Gerät weder senden noch empfangen. Für den üblichen Telefonbetrieb stellt das jedoch keine spürbare Einschränkung dar. Für die hier vorgeschlagene Synchronisation bedeutet das, dass jeder zweite Synchronisationspuls ausfallen kann, wie es in Figur 9 anhand des Zeitschemas einer Basisstation BS dargestellt ist.

Dieses stellt gegenüber einer sowieso vorhandenen Latenzzeit von im Mittel 320 Millisekunden jedoch keinen gravierenden Nachteil dar. Ausgleichsmöglichkeiten bieten im Übrigen die Vorschläge gemäß dem vierten und fünften Ausführungsbeispiel, wobei mehrere "Dummy-Bearer" DB in einem Zeitschlitz verwendet oder auch in dem ersten RX-Teilrahmen gesendet werden.

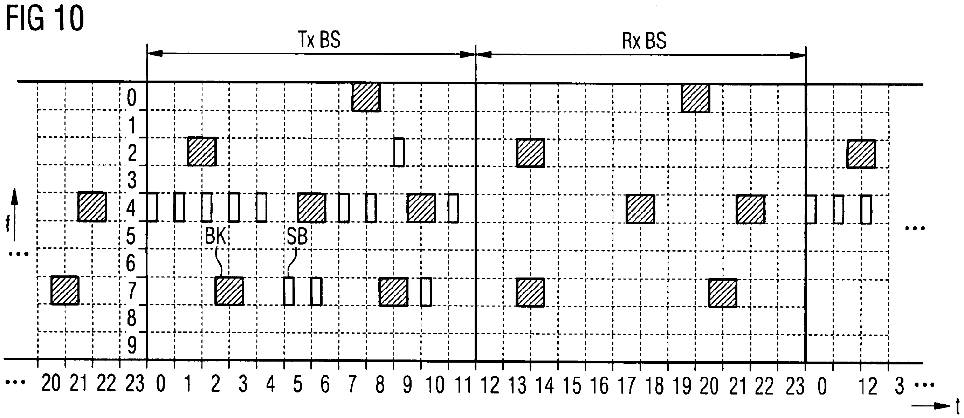

Figur 10 zeigt eine vereinfachte Darstellung eines Zeit-/Frequenzbereichs zur Veranschaulichung einer schnellen Synchronisation gemäß einem siebenten Ausführungsbeispiel, wobei nicht synchrone, benachbarte Systeme berücksichtigt werden. Die vorstehend beschriebenen Ausführungsbeispiele gehen davon aus, dass benachbarte Kommunikationssysteme bzw. DECT-Systeme auch untereinander ein gemeinsames Zeitraster einhalten, mithin untereinander synchronisiert sind.

Dieses ist bei den heutigen Kommunikationssystemen aber nur in Ausnahmefällen der Fall. In der Regel sind die Systeme untereinander asynchron und driften mit ihrem Zeitbezug gegeneinander.

Da der DECT-Standard Mechanismen zur Kollisionserkennung kennt, wird in einem solchen Fall ein anderer Zeitschlitz oder eine andere Frequenz gewählt.

Für das hier beschriebene Ausführungsbeispiel bedeutet dieses, dass vor einer Synchronisation die Lage der anderen Kommunikationssysteme per RSSI-Signal gemessen werden kann. Belegte Zeitschlitze FS werden hierbei nicht zur Synchronisation verwendet wie es bereits im Ausführungsbeispiel 3 beschrieben ist.

Zusätzlich kann jedoch gemäß Figur 10 ein weiterer Zeitschlitz gesperrt sein, da ein Zeitschlitz eines Systems sich über zwei Zeitschlitze eines anderen Systems erstrecken kann. Gemäß Figur 10 ist dieses für die belegten Kanäle BK in der Frequenz f=4 der Fall. Folglich verschieben sich dann einzelne Synchronisationspulse SB auf andere Frequenzen (Ausweichfrequenzen wie beispielsweise im Ausführungsbeispiel 3).

Nachfolgend werden spezifische Aspekte der schnellen Synchronisation im Einzelnen dargestellt.

Erfindungsgemäß wird eine schnelle Synchronisation in einem TDMA-System (z.B. DECT) realisiert, ohne dass ein Dauer-"Dummy-Bearer" im Ruhezustand notwendig ist. Insbesondere wird der Fall berücksichtigt, bei dem Mobilteile zwar in Reichweite der Basisstation, nicht aber in gegenseitiger Reichweite sind. Liegen also zwei Mobilteile an zur Basisstation BS entgegengesetzten Enden der Reichweite, so muss die Basisstation BS in Bezug auf die Synchronisierung zusätzlich aktiv werden. Die Basisstation kann in diesem Fall durch einen zweiten Synchronisationsvorgang diejenigen Mobilteile nachsynchronisieren, die sich nicht in direkter Reichweite zu dem die Synchronisation durchführenden Mobilteil befinden. Dieser als nachgeholte Synchronisierung beschriebene Vorgang wird auch als asymmetrische Synchronisierung bezeichnet, da er im Gegensatz zur vorstehenden symmetrischen Synchronisierung keine Gleichberechtigung zwischen Basisstation und Mobilteil bei der Synchronisationsdurchführung ermöglicht.

Bei diesem asymmetrischen Synchronisieren sind demzufolge Basisstation und Mobilteil nicht gleichberechtigt bei der Synchronisationsdurchführung, weshalb die Verwaltung eines zweiten Synchronisationsrasters in der Basisstation entfällt. Ein Mobilteil MT mit Verbindungswunsch meldet diesen bei der Basisstation BS an. Es kann dazu für eine begrenzte Zeit als Abfragepulse AP bezeichnete Synchronisationspulse senden, welche keine erweiterte Synchronisationsinformation XSync enthalten. Dazu können mehrere, hintereinander liegende freie Zeitschlitze verwendet werden, was sicherstellt, dass die Basisstation diese schnell findet. Ferner kann die Aussendung wiederum auf einer vorher vereinbarten Vorzugsfrequenz liegen.

Stellt die Basisstation einen derartigen Synchronisierungswunsch fest, so kann sie entsprechend den vorstehend beschriebenen Ausführungsbeispielen gemäß Figuren 4 bis 10, welche sich auf eine symmetrische Synchronisierung beziehen, das schnelle Synchronisationsverfahren (asymmetrisch) durchführen. Dabei kann das asymmetrische Synchronisationsverfahren in das symmetrische Synchronisationsverfahren übergeführt werden. Bei dieser asymmetrischen Vorgehensweise kann zudem ausgenutzt werden, dass die am Stromnetz betriebene Basisstation BS ihre Empfangseinheit öfter und länger einschalten kann als ein aus seinem Akkumulator gespeistes Mobilteil MT.

Trotz der Unterscheidung zwischen asymmetrischem Synchronisationsverfahren und symmetrischem Synchronisationsverfahren macht es für die schnelle Synchronisierung grundsätzlich keinen Unterschied, ob eine Basisstation oder ein Mobilteil das System für eine Verbindung synchronisiert. Durch das zunächst asymmetrische Synchronisationsverfahren und dann im weiteren Verlauf das symmetrische Synchronisationsverfahren kann eine noch schnellere Systemsynchronisation erreicht werden.

In den vorstehend beschriebenen Ausführungsbeispielen wird allgemein von mehreren, im Wesentlichen aber zumindest zwei Synchronisationspulsen pro Zeitrahmen FR ausgegangen. Zur Unterscheidung können diese eine Kennzeichnung enthalten, ob es sich um einen ersten oder einen zweiten Synchronisationspuls im "burst" bzw. Zeitrahmen FR handelt, wobei die Basisstation und das Mobilteil bezüglich der Synchronisation gleichberechtigt (symmetrische Synchronisierung) oder nicht gleichberechtigt (asymmetrische Synchronisierung) sein können.

Die Figuren 11A bis 11C zeigen eine detaillierte Darstellung von bei einer schnellen Synchronisierung verwendbaren Synchronisationspulsen, wobei ein Bytezähler die jeweiligen Bits für einen sogenannten "full-slot"-Zeitschlitz 1FS und einen sogenannten "Long-slot"-Zeitschlitz 2FS mit ihren zugehörigen Synchronisationspulsen darstellt. Mit "full-packed" ist hierbei eine maximale Belegung des B-Feldes mit Synchronisationspulsen beschrieben, während "half-slot boundaries" eine sogenannte Half-slot-Einteilung festlegen. In gleicher Weise ist mit "long-packed" eine Positionierung von Synchronisationspulsen in dem langen Zeitschlitz (80 Bytes im B-Feld) dargestellt.

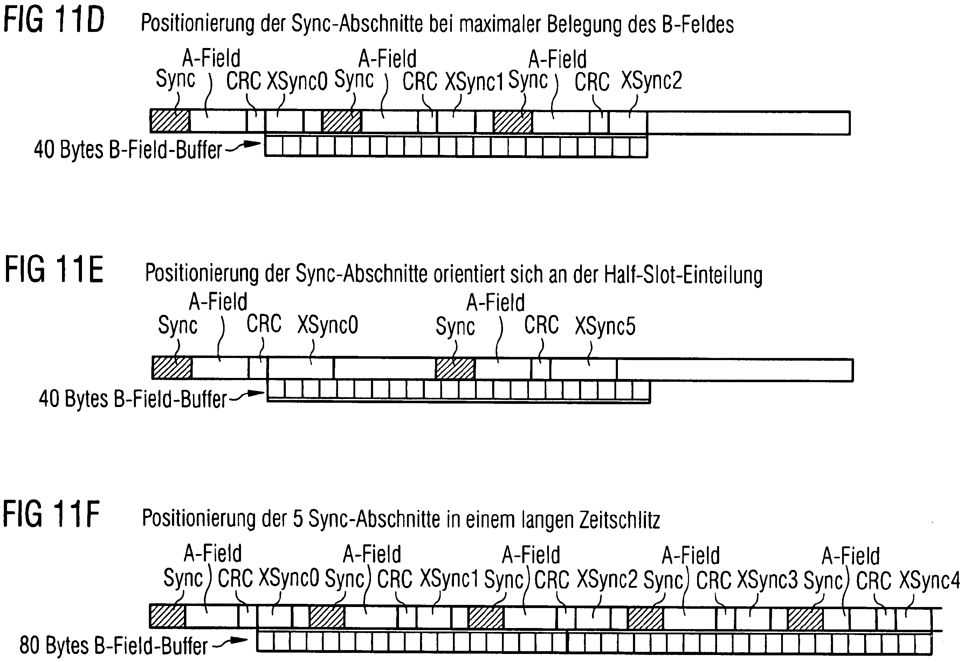

Die Verbesserung des reinen symmetrischen Synchronisationsverfahrens kann sich auf die drei nachfolgenden Aspekte beziehen:
a) Die zur Verfügung stehende Sendezeit wird mit zwei, drei oder im Falle eines langen Zeitschlitzes (long-slot) mit fünf Synchronisationspulsen SB pro Zeitschlitz gefüllt. Siehe auch die zugehörigen vereinfachten Darstellungen gemäß Figur 11D, 11E und 11F, wobei Figur 11D die Positionierung der Syncronisationspulse bei maximaler Belegung, Figur 11E in der sogenannten "Half-Slot"-Einteilung und Figur 11F in einem lagen Zeitschlitz angibt. Bei mehr als zwei Synchronisationspulsen können diese allein durch ein spezielles Datenmuster innerhalb eines normalen "DECT-Burst" erzeugt werden.

Gemäß Figur 11 kann durch Ausweitung der Anzahl der Synchronisationspulse SB auf beispielsweise drei, fünf oder sechs die Verfügbare Zeit optimal genutzt werden. Für den Fall kurzer Abfragepulse AP des Mobilteils lassen sich noch mehr Pulse, diesmal Abfragepulse AP, in einen Zeitschlitz FS hinein packen.
b) In den Synchronisationspulsen SB kann nicht nur ein Bit zur Unterscheidung des ersten oder zweiten Synchronisationspulses innerhalb eines DECT-Zeitschlitzes FS verwendet werden, sondern ein mehrere Stellen umfassender Zählerstand S. Dieser erlaubt es, die Position des Synchronisationszeitpunktes über mehrere Zeitschlitze FS hinweg exakt zu berechnen, wenn auch nur ein einziger Synchronisationspuls SB empfangen wurde.

Vorzugsweise kann das Kennzeichnungsbit zu einem Zähler ausgebaut werden, so dass ein größerer Zeitbereich wie beispielsweise ein vollständiger Zeitrahmen FR damit abgedeckt werden kann.
c) Die Synchronisation des Systems wird grundsätzlich von der Basisstation durchgeführt. Damit nehmen alle Mobilteile daran teil, die sich in Systemreichweite befinden. Die Basisstation muss dabei auch nicht zwei Zeitbezüge verwalten. Ebenso entfällt ein Überwechseln des Zeitbezuges vom Mobilteil auf die Basisstation, wenn die Basisstation andere Mobilteile nachsynchronisiert. Das Mobilteil MT kann beispielsweise zeitlich begrenzte Abfragepulse AP an die Basisstation BS senden. Die Basisstation kann diese Abfragepulse AP auch im asynchronen Zustand auswerten. Sie stellt einen Verbindungswunsch eines ihrer Mobilteile fest und beginnt ihrerseits mit dem eigentlichen Synchronisationsvorgang, d.h. Aussenden von Synchronisationspulsen SB, auf die sich dann auch das Mobilteil synchronisiert, von dem die Abfrage ausgegangen ist.

Durch die grundsätzliche Verschiebung der Synchronisation auf die Basisstation BS kann es Mobilteilen ermöglicht werden, bei der Basisstation durch kurze Abfragepulse AP diesen Synchronisationsvorgang auszulösen.

Gemäß Figuren 11A bis 11E kann ein normaler DECT-Zeitschlitz für mehrere Synchronisationsabschnitte genutzt werden: an das am Anfang eines jeden DECT-Zeitschlitzes vorhandene SYNC-, A-und CRC-Feld (SYNChronisation, Cyclic Redundancy Check) wird ein erweiterter Synchronisationsabschnitt bzw. ein erweitertes Synchronisationsfeld angehängt, welches eine erweiterte Synchronisationsinformation XSync darstellt. Damit wird das 40 Bit lange B-Feld des Zeitschlitzes FS aber nicht vollständig genutzt. Eine oder zwei weitere Synchronisationsabschnitte bzw. Synchronisationspulse SB lassen sich hier unterbringen. Im XSync-Abschnitt ist dabei Information enthalten, an welcher Stelle des Zeitschlitzes bzw. an welcher Stelle des Zeitrahmens sich der Synchronisationspuls SB befindet.

Verwendet ein Gerät gemäß Figur 11E ein sogenanntes "Long-slot"-Format mit einem 80 Bit langen B-Feld, so lassen sich bis zu fünf Synchronisationspulse SB mit erweiterten Synchronisationsabschnitten XSync unterbringen.

Die nachfolgende Tabelle 1 gibt den Inhalt eines weiteren Synchronisationspulses SB wieder, wie er alternativ zu dem in Figuren 11A bis 11C dargestellten Synchronisationspuls SB verwendet werden kann.

**Tabelle 1**

| | SYNC-Field | A-Field + CRC | SYNC-Info | Slot | PSCN | Frame | Multi-Frame | Lock-Channel | | Chksum |
|---|---|---|---|---|---|---|---|---|---|---|
| Bitcount | S0..31 | A0...63 | B0.2 | B3. 7 | B8 .11 | B12...15 | B16..39 | B40..43 | B44...47 | B48...55 |
| Content | AAAAE98A | N-Frame | Positon | 0...23 | PSCN | Fr-Cnt | Multi-Frame-No. | Frequency | Slot | |
| Byte-count | 0...3 | 4.11 | 12 | | 13 | | 14...16 | 17 | | 18 |

Danach besteht dieser Synchronisationspuls SB in Byte 0 bis 11 aus einem herkömmlichen Synchronisationspuls bzw. "Dummy-Bearer" DB, an den in Byte 12 bis 18 eine erweiterte Synchronisationsinformation XSync angehängt wird. Diese erweiterte Synchronisationsinformation wird im herkömmlichen System im Zeitmultiplex im A-Feld eines Dummy-Bearers DB übertragen. Bei einer schnellen Synchronisation müssen diese Informationen natürlich sofort verfügbar sein.

Neu an dem Inhalt des erfindungsgemäßen Synchronisationspulses SB ist der erste Teil S von "Byte 12", der zusätzlich die Position des Synchronisationspulses SB innerhalb des Zeitschlitzes FS angibt. Mit dieser Information eines einzigen Synchronisationspulses SB bzw. nach Figuren 11A bis 11C oder Tabelle 1 kann damit ein Gerät die Synchronität zum System vollständig bestimmen und auch einnehmen. Die meisten Felder der Tabelle 1 erklären sich von selbst, da die Begriffe und Abkürzungen aus dem DECT-Standard bekannt sind. Nachfolgend erfolgt daher lediglich eine Beschreibung von neu definierten Datenfeldern:

### "SYNC-Info"

Mehrere Synchronisationspulse SB können in einem "Full-/Long-Slot" untergebracht werden, wobei die "SYNC-Info" als Zeitschlitzbezogene Information anzeigt, an welcher Position innerhalb eines jeweiligen Zeitschlitzes FS sich der jeweilige Synchronisationspuls SB exakt befindet.

**Tabelle 2**

| SYNC-Info B0...B2 | Position von s0 im Slot |
|---|---|
| 000 | f0 |
| 001 | f144 |
| 010 | f288 |
| 011 | f432 |
| 100 | f568 |
| 101 | f240 (Half-Slot-boundary) |
| 110 | reserved |
| 111 | reserved |

### "Lock-Channel"

Der "Lock-Channel" bzw. die "Dummy-Bearer"-Information L zeigt an, wo sich der normale "Dummy-Bearer" DB im Zeitrahmen FR befindet. Die Notation entspricht derjenigen, die auch beim "Broadcast" der "Dummy-Bearer"-Position genutzt wird. Folglich wird hier die entsprechende Frequenz und der zugehörige Zeitschlitz angegeben, an der sich der normale "Dummy-Bearer" finden lässt.

### "Checksum (chksum)"

Die Checksumme C ist eher eine weiche "Checksumme", die sich aus einer exklusiv-ODER-Verknüpfung der Bytes der erweiterten Synchronisationsinformation XSync (Bytes 12 bis 17) ergibt. Der Empfänger sollte sich darüber klar sein, dass selbst mit korrekter "Checksumme" ein Übertragungsfehler in den Daten enthalten sein kann.

Durch die zusätzlichen Sync-Informationen kann das Mobilteil nach dem Empfang von nur einem "burst" Bit-, Zeitschlitz- und Zeitrahmen-Synchronität zur Basisstation BS herstellen und die Empfangseinheit (receiver) so positionieren, dass er den angezeigten "Lock-channel" L verwendet.

Die statischen Eigenschaften ("Capabilities") der Basisstation BS, die beim normalen Synchronisieren aufgenommen wurden, werden nicht zusätzlich gesondert übertragen. Das Mobilteil kann weiterhin auf die bereits gespeicherten Werte zurückgreifen.

Die Basisstation sollte die Synchronisationspuls-Phase nicht länger als 64 bis 128 Zeitrahmen FR andauern lassen, da die Synchronisationspulse SB potentielle "Setup"-Zeitschlitze blockieren. Während dieser Phase sollte wenigstens ein Empfangszeitschlitz offen gelassen werden, um wenigstens einem Mobilteil die Möglichkeit für einen schnellen "Setup" einzuräumen. Wenn die Synchronisations-Phase länger dauert könnten "Setup-Timer" im Mobilteil auslaufen und der "Setup" verloren gehen.

Wie vorstehend beschrieben wurde, synchronisiert beim symmetrischen Synchronisationsverfahren das Gerät (Mobilteil oder Basisstation), welches als erstes einen Verbindungswunsch hat, das gesamte System auf sein Zeitraster. Das schließt auch den Fall der Synchronisierung einer Basisstation auf ein Mobilteil mit ein. Wie bereits vorstehend beschrieben, stellen hierbei weit auseinander liegende Mobilteile ein Problem dar. Nach einer ersten Synchronisierung der Basisstation muss diese nämlich eine weitere Synchronisierung der nicht erreichten Mobilteile durchführen.

Dieses Vorgehen wird durch die vorstehend beschriebene asymmetrische Synchronisierung des Systems optimiert, wonach nur die Basisstation das System synchronisiert. Ein Mobilteil kann seinen Synchronisationswunsch im asynchronen Ruhezustand des Systems durch das Aussenden von verkürzten Synchronisationspulsen anmelden, die als Abfragepulse AP bezeichnet werden. Ein solcher mobilteilspezifischer Abfragepuls AP ist in Tabelle 3 wiedergegeben.

**Tabelle 3**

| | SYNC-Field | A-Field + CRC |
|---|---|---|
| Bitcount | S0...31 | A0...63 |
| Content | 55551675 | N-Frame |
| Bytecount | 0...3 | 4...11 |

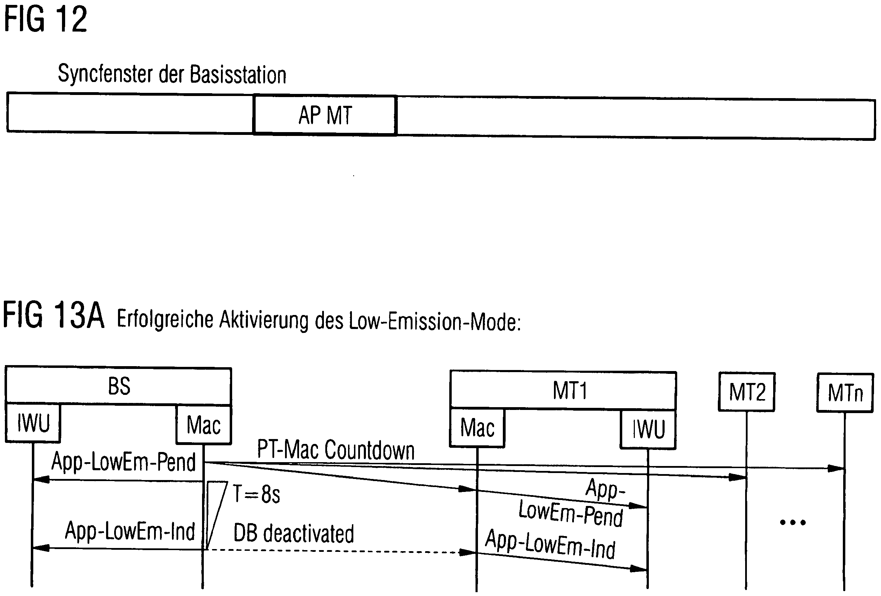

Figur 12 zeigt eine vereinfachte Darstellung eines Synchronisationsfensters einer Basisstation BS zum Empfangen eines von einem Mobilteil gesendeten Abfragepulses AP. Fällt der in Tabelle 3 spezifizierte Abfragepuls AP in das relativ dazu sehr lange SYNC-Fenster einer Basisstation, so kann diese anhand der darin enthaltenen RFPI (Radio Fixed Part Identity) erkennen, dass es sich um ein zum System gehöriges Mobilteil mit Verbindungswunsch handelt. Die Basisstation beginnt nun ihrerseits mit dem Aussenden von Synchronisationspulsen SB. Diese enthalten jetzt aber alle Informationen auch für die erweiterten Synchronisationsinformationen (XSync) zum Synchronisieren des Systems, d.h. aller Mobilteile.

Der Abfragepuls AP eines Mobilteils enthält hingegen bei asymmetrischer Synchronisation keine derartige erweiterte Synchronisationsinformation XSync.

Beispielsweise kann das Mobilteil seinerseits die Synchronisationspulse SB der dann aus dem asynchronen Ruhezustand aufgeweckten Basisstation suchen, wenn es für eine bestimmte Zeit seine Abfragepulse AP gesendet hat.

Gemäß der vorliegenden Erfindung kann ein Gerät (z.B. Basisstation) bei eingehendem Anruf auf einer verabredeten Frequenz, z.B. im "Half-Slot"-Zeitraster Synchronisationspulse SB senden. Das Zeitraster beträgt an Stelle der üblichen zehn Millisekunden beim herkömmlichen DECT-Standard nunmehr beispielsweise 416 Mikrosekunden. Ferner kann ein Mobilteil, das wie bisher im asynchronen Zustand alle 640 Millisekunden seine Empfangseinheit öffnet, unmittelbar einen verwertbaren Synchronisationspuls SB finden und kann damit mit einer Verzögerungszeit tᵣ < 1s aus dem asynchronen Ruhezustand heraus reagieren. Bei den in den Figuren 4 bis 10 dargestellten Zeit-/Frequenzbereichen ergibt sich damit eine mindestens 24 mal schnellere Synchronisierung. Bei Verwendung einer verabredeten Vorzugsfrequenz, auf der die Synchronisationspulse gesendet werden, ergibt sich sogar eine bis zu 240 mal schnellere Synchronisierung.

Obwohl der vorstehend beschriebene asynchrone Ruhezustand auf beliebige Weise eingestellt werden kann, erfolgt vorzugsweise ein definiertes Herunterfahren in den asynchronen Ruhezustand, der nachfolgend auch als "No-Emission-mode" oder "Low-Emission-Mode" bezeichnet wird.

Wie vorstehend bereits beschrieben wurde, werden beim sogenannten "Low-Emission-Mode" sämtliche Einheiten (Transmitter) in der Basisstation BS und dem Mobilteil bzw. den Mobilteilen MT1, MT2 komplett ausgeschaltet. Außerdem entfällt die Begrenzung wie beim eingangs beschriebenen "Green-DECT-Mode", bei dem der Modus nur eingenommen werden kann, wenn nur ein Mobilteil angemeldet ist und sich dieses auch in der Ladeschale befindet.

Das Herunterfahren in den Ruhezustand wird zwischen allen Systemkomponenten (Basisstation und Mobilteile) verhandelt und ein Algorithmus garantiert hinreichend kurze Re-Synchronisierungszeiten, falls eine HF-Verbindung erforderlich wird.

Figuren 13A bis 13C zeigen vereinfachte Zustandsdiagramme zur Veranschaulichung einer erfolgreichen Aktivierung des Ruhezustands sowie eine Verweigerung durch das Mobilteil oder durch die Basisstation. Mit IWU ist hierbei jeweils eine Inter Working Unit und mit MAC jeweils ein Medium Access Controller definiert.

Gemäß Figur 13A kann die Basisstation BS mit einer Vielzahl von Mobilteilen MT1 bis MTn verbunden sein. Nachdem das Kommunikationssystem für eine bestimmte Zeit in Ruhe war und bekannt ist, dass alle Mobilteile MT1 bis MTn den asynchronen Ruhezustand bzw. "Low-Emission-Mode" beherrschen und freigegeben (bzw. nicht blockiert) haben, beginnt die Basisstation z.B. eine "Countdown"-Information im "Dummy-Bearer" DB zu senden. Dieses ist gemäß Figur 13A bis 13C beispielsweise als eine "PT-MAC"-Meldung (Paging Tail; Medium ACcess) realisiert. Die Mobilteile MT1 bis MTn empfangen diese Meldung und werden somit über den bevorstehenden Ruhezustand informiert. Für einen erfolgreichen Einstieg in den Modus ist keine weitere Kommunikation zwischen den Teilnehmern erforderlich.

Um möglichst wenig Abweichung von den normalen "Dummy-Bearer"-Meldungen zu erzeugen, wird die "PT-MAC"-Meldung in "Frame 0" gesendet, während eine sonst an dieser Stelle übliche Meldung in "Frame 1" gesendet wird, die jedoch im Ruhezustand von den Mobilteilen MT1 bis MTn nicht empfangen wird. Mit Hilfe eines "Extend-Flag" in der "PT-MAC"-Meldung werden die Mobilteile dazu gebracht, diesen "Frame 1" ebenfalls zu empfangen.

Tabelle 4 zeigt das generelle "paging tail"-Format.

**Tabelle 4**

| PT-Header | 20 Bits of BS-Channel-Data | Info-Type | MAC-Info |
|---|---|---|---|
| a8 a11 | a12 a31 | a32 a35 | a36 a47 |

In der nachfolgenden Tabelle 5 ist die Bearer-Handover/Replacement-Information (a36 bis a47) dargestellt, wobei Info-Type (a32 bis a35 = 1001) ist.

**Tabelle 5**

| Mac-Info-Type (a36...a39) | Parameter (a40...a47) | Bedeutung |
|---|---|---|
| 0000 | 00001111 | kein Bearer Handover/Replacement zu anderen RFPs, kein Intrazell Bearer Handover/Replacement |
| 0001 | 00001111 | Kein Bearer Handover/Replacement zu anderen RFPs, Intrazell Bearer Handover/Replacement wird unterstützt |
| 0010 | 00001111 / | Hearer Handover/Replacemet wird im gesamten internen Handover Bereich unterstützt |
| 0011 | bit mask | Bearer Handover/Replacement wird für alle RFPs mit einer RFPI unterstützt, die sich nur in den maskierten Bits unterscheidet |
| 0100 | a40-a43:scan-channel a44-a47:hyperframe-countdown | Idle-Scan-Kanal Anzahl von Hyperframes a) bis der Dummy-Bearer deaktiviert wird |
| 0101 | ) | |
| to | ) reserviert | |
| 1111 | ) | |

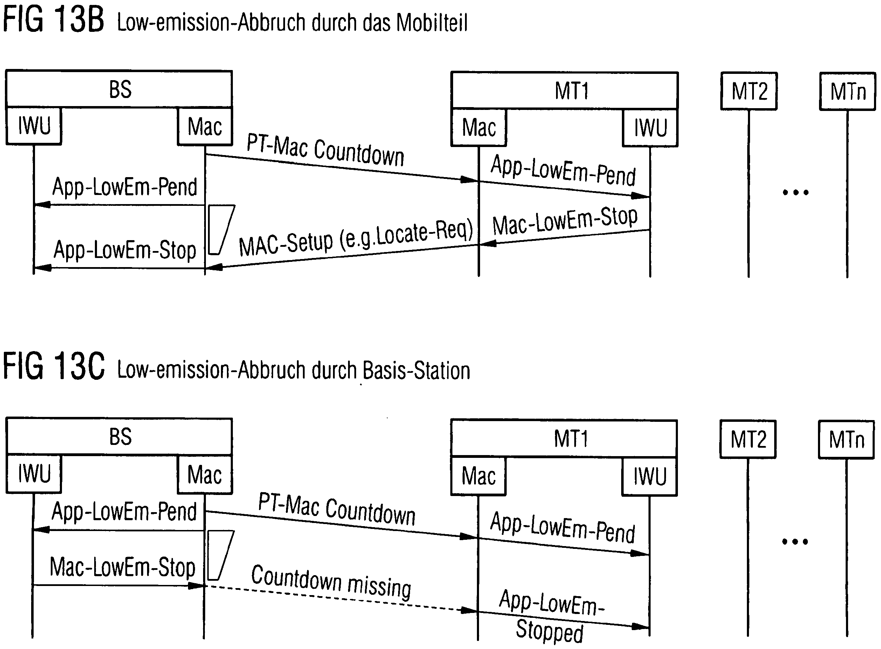

Beispielsweise kann ein "Hyperframe-Countdown" in Schritten von 4 "Multiframes" herunterzählen. Inkrementiert wird der "Hyperframe-Counter", wenn ein "Multiframe-Counter" beim Modulo 4 von "3" auf "0" wechselt. Der "Dummy-Bearer" DB wird nach "Frame 0" im ersten "Multiframe" des betreffenden "Hyperframes" deaktiviert, wie in Figur 13A dargestellt ist. Gemäß Figur 13B können die Mobilteile MT1 bis MTn den asynchronen Ruhezustand bzw. "Low-Emission-Mode" verhindern, indem sie eine MAC-Verbindung zur Basisstation aufbauen (z.B. Location Registration). Basisstationsseitig wird dann unmittelbar die Versendung des Countdowns beendet. Ein erneuter Aktivierungsversuch des asynchronen Ruhezustands kann automatisch nach einer noch zu definierenden Zeit versucht werden.

Momentan ist kein Grund bekannt, wozu ein Mobilteil für eine mobilteil-lokale Prozedur einen "Dummy-Bearer" DB der Basisstation BS benötigen würde.

Außer durch das Aufbauen einer MAC-Verbindung kann das Mobilteil den "Low-Emission-Mode" auch dauerhaft mittels einer "NWK-layer"-Meldung (NetWorK) oder durch eine Verhandlung während der Anmeldung verhindern. Durch einen "Countdown"-Zähler können die Mobilteile im vorhinein den exakten Zeitpunkt bestimmen, wann der "Dummy-Bearer" DB abgeschaltet wird.

Wenn gemäß Figur 13C der "Countdown" ausläuft, ohne dass vorher ein "Setup" erfolgt ist, wie in Figur 13B dargestellt, so werden alle Sendeeinheiten abgeschaltet und jedes Gerät fällt in einen speziellen Empfangsmodus. Auf diese Weise kann der Modus eingenommen werden, ohne dass vorher eine separate Verbindung zu jedem Mobilteil aufgebaut werden muss. Dieses kommt der spektralen Effizienz zugute.

Falls das Mobilteil den "Frame" nicht empfängt, in dem der "Countdown"-Zähler auf "0" zählt, so ist der Systemzustand für dieses Mobilteil unklar. Es könnte sich demzufolge im asynchronen Ruhezustand ("Low-Emission-Mode") oder im normalen Ruhezustand befinden oder das Mobilteil könnte außerhalb der Reichweite gelangt sein.

Deshalb könnte der folgende Ablauf durchgeführt werden:
1. normale Suche (Scan) nach der Basisstation
   - > Mobilteil empfängt Basisstation -> Systemzustand ist normaler Betrieb.
2. Aufweck-Ruf starten
   - > Basisstation wird daraufhin sichtbar -> Systemzustand ist wieder normaler Betrieb.
   - > Basisstation wird daraufhin nicht sichtbar -> Mobilteil muss außerhalb der Reichweite sein / Basis aus.

Bei letzterem Ergebnis sollte das Mobilteil die Schritte 1 bis 2 regelmäßig wiederholen.

Wie bereits beschrieben wurde, scannen im asynchronen Ruhezustand bzw. "Low-Emission-Mode" alle Mobilteile inklusive der Basisstation in dem Kommunikationssystem beispielsweise auf der Vorzugsfrequenz nach Teilnehmern, die aktiv werden. Die Basisstation kann kontinuierlich scannen, während die Mobilteile immer nur für einen relativ kurzen Zeitraum scannen sollten, damit die Standby-Zeit vergleichbar mit dem normalen Modus bleibt. Es gilt hier einen optimalen Kompromiss zwischen Standby- und Reaktionszeit zu finden.

Als Ausgangswert wird für die Mobilteile angenommen, dass sie für 10 bis 20 Millisekunden scannen und die nachfolgenden Suchpausen (Scanpausen) etwa 600 Millisekunden andauern.

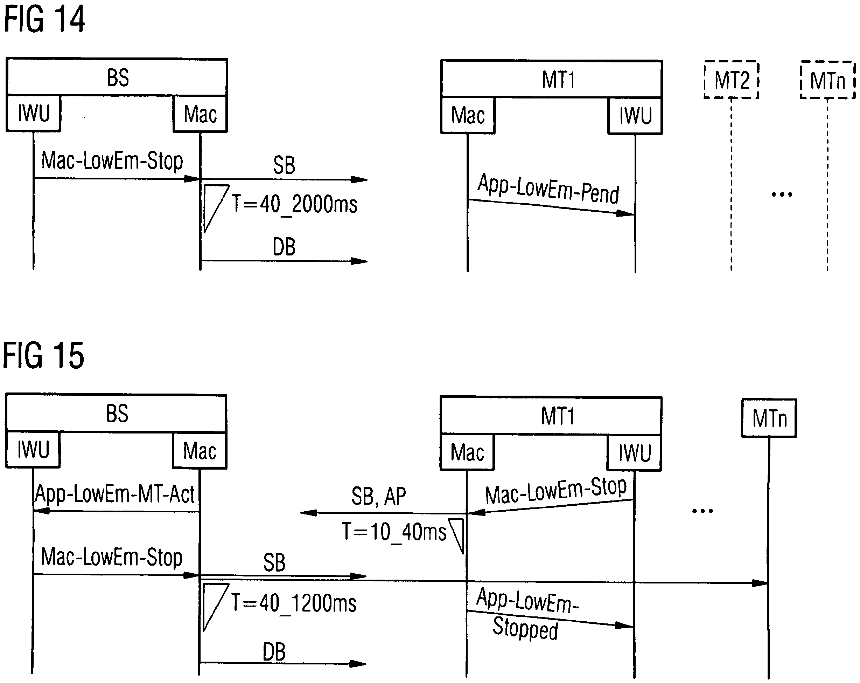

Figur 14 zeigt eine vereinfachte Darstellung eines Zustandsdiagramms zur Veranschaulichung eines basisstationsseitigen Beendens des asynchronen Ruhezustands, wobei gleiche Bezugszeichen gleiche oder entsprechende Elemente bezeichnen wie in den Figuren 13A bis 13C und auf eine wiederholte Beschreibung nachfolgend verzichtet wird.

Wenn z.B. wegen eines eingehenden Rufes die Basisstation BS den asynchronen Zustand beenden muss, kann sie zunächst eine erweiterte Kanalselektion auf beispielsweise einer Vorzugsfrequenz durchführen.

Die Auswahl kann in einer Weise erfolgen, dass "Full-Slots", "Long-Slots" oder auch beide Typen selektiert werden. Jeder Zeitschlitz FS, der hinreichend frei und selektierbar in RX-und TX-Zeitrahmenhälfte ist, kann dazu genutzt werden einen Synchronisationspuls SB, d.h. einen "Dummy-Bearer" DB mit erweiterter Synchronisationsinformation XSync zu senden.

Nur einer der ausgewählten Zeitschlitze soll einen Standard-"Dummy-Bearer" DB senden, auf den sich die Synchronisationspulse SB dann beziehen.

Die anderen ausgewählten "Full-Slots" oder "Long-Slots" enthalten z.B. zwei bis fünf "Dummy-Bearer", die im A-Feld ausschließlich "N-frames" senden und erweiterte SYNC-Informationen XSync hinter der "A-Feld-CRC" bereit halten können.

Wie anhand von Figuren 11A bis 11C bereits beschrieben wurde, wird das Zeitschlitzformat "Full" oder "Long" lediglich als "Container" benutzt. Auf der Empfängerseite brauchen daher nicht notwendigerweise erweiterte Zeitschlitzformate als solche unterstützt werden. Ein Empfang als "Full-Slot" wird empfohlen, da auf diese Weise die gleiche Information gegebenenfalls mehrfach vorliegt und besser validiert werden kann.

Damit Synchronisationspulse SB im B-Feld korrekt zum Mobilteil übertragen werden können, sollte der "Scrambler" ausgeschaltet sein. In der Basisstation BS kann es daher ausreichend sein, wenn der "A-Feld-CRC"-Abschnitt für die Synchronisationspulse SB im B-Feld einmalig beim Systemstart berechnet/hinterlegt wird, da sich die "RFPI" nicht ändern wird.

Mobilteile benötigen für ihren eigenen Aufweck-Ruf bzw. die Abfragepulse AP einen Algorithmus, mit dem der "A-Feld-CRC"-Abschnitt zur Laufzeit berechnet werden kann. Durch Ändern des Basisfilters, An- und Abmelden kann sich die "RFPI" häufig ändern.

Figur 14 zeigt dieses Szenario in Verbindung mit den vorstehend beschriebenen Figuren 11A bis 11C bzw. alternativen Tabelle 1.

Figur 15 zeigt ein vereinfachtes Zustandsdiagramm zur Veranschaulichung eines mobilteilseitigen Beendens des asynchronen Ruhezustands, wobei gleiche Bezugszeichen gleiche oder entsprechende Elemente wie in den Figuren 13 und 14 bezeichnen, weshalb auf eine wiederholte Beschreibung nachfolgend verzichtet wird.

Wenn das Mobilteil den asynchronen Ruhezustand bzw. "Low-Emission-Mode" beenden will, so kann es ebenfalls kurzzeitig einen oder mehrere Synchronisationspulse SB auf beispielsweise der Vorzugsfrequenz aussenden. Gemäß vorstehender Beschreibung müssen diese Synchronisationspulse SB jedoch als Abfragepulse AP auch keine erweiterte Synchronisationsinformation XSync enthalten, wenn sich die Basisstation nicht auf die Mobilteile zu synchronisieren braucht, wie dieses im asymmetrischen Synchronisationsverfahren der Fall ist. Da das SYNC-Feld wie im normalen Mobilteil-Betrieb kodiert ist, können alle Systemteilnehmer zwischen Synchronisationspulsen von der Basisstation und Synchronisationspulsen von einem Mobilteil unterschieden (siehe auch Tabelle 3 bzw. Figur 11C).

Der "N-Frame" enthält die "RFPI" der Basisstation, die beispielsweise aufgeweckt werden soll. Mehrere dieser Synchronisationspulse SB können in einen "Full-Slot" gepackt werden, um eine höhere Wahrscheinlichkeit für den Empfang in der Basisstation zu erzielen. Ein "Full-Slot" kann bis zu vier Synchronisationspulse SB enthalten.

Die Synchronisationspuls-Phase sollte nur 2 bis 4 Zeitrahmen FR andauern, da die Basisstation ohnehin fortwährend scannt. Wenn die Basisstation BS einen mobilteilspezifischen Synchronisationspuls SB empfängt, der die eigene "RFPI" enthält, und die Basisstation ihrerseits auf das Aussenden von Synchronisationspulsen SB umschalten. Das initiierende Mobilteil sollte sofort nach dem Aussenden der Synchronisationspulse bzw. Abfragepulse die weitere Aussendung abbrechen und auf das Scannen nach basisstationsspezifischen Synchronisationspulsen SB umschalten. Eventuell ist für dieses Mobilteil ein intensiveres Scannen angezeigt, um einen "Setup" möglichst ohne Zeitverlust zu bewerkstelligen.

Der weitere Synchronisationsvorgang findet wie vorstehend beschrieben statt.

Das vorstehend beschriebene Vorgehen umgeht die Notwendigkeit, dass Synchronisationsmechanismen in der Basisstation implementiert werden müssen und dass Mobilteile sich außer auf Basisstationen auch auf andere Mobilteile aufsynchronisieren können müssen.

Weiterhin gibt es dadurch keine Probleme, wenn in einem Kollisionsfall zwei oder mehr Mobilteile gleichzeitig eine Verbindung zur Basisstation aufbauen möchten. Während des asynchronen Ruhezustands ist dieser Fall gleichbedeutend mit drei oder mehr verschiedenen Synchronisationspuls-Quellen, so dass mindestens zwei Mobilteile ihre Synchronisation anpassen müssten.

Nach einem "Reset" kann die Basisstation BS immer mit einer kurzen Synchronisationspuls-Phase beginnen, da ein Netzausfall oder ein anderes Ereignis einen "Reset" in der Basisstation BS ausgelöst haben könnte.

Die Basisstation weiß üblicherweise nichts von der Vorgeschichte und ob gegebenenfalls zuletzt der asynchrone Ruhezustand bzw. "Low-Emission-Mode" aktiv gewesen ist. Möglicherweise können sich auch Mobilteile noch immer im asynchronen Ruhezustand befinden und haben von dem Neustart der Basisstation nichts mitbekommen.

Ähnlich verhält es sich bei Mobilteilen, die aus dem "Reset" hochlaufen. Wenn das Mobilteil an einem Kommunikationssystem betrieben wird, welches den asynchronen Ruhezustand unterstützt, so kann es sein, dass der Akkumulator leer gelaufen war und sich das restliche System noch immer im asynchronen Ruhezustand befindet. Daher sollte nach einer erfolglosen Suche der Basisstation (Basisstation-Scan) ein Aufweckruf (Senden von Abfragepulsen AP oder Synchronisationspulsen SB) erfolgen. Diese Vorgänge sind ebenfalls durch das Zustandsdiagramm gemäß Figur 15 abgedeckt.

Die vorstehende Erfindung wurde anhand eines DECT-Kommunikationssystems beschrieben. Sie ist jedoch nicht darauf beschränkt und umfasst in gleicher Weise auch weitere TDMAbasierte Kommunikationssysteme mit drahtloser Schnittstelle, bei der zur schnellen Synchronisierung ein Synchronisationspuls verwendet wird.

### Bezugszeichenliste

- 1: Empfangseinheit
- 2: Auswerteeinheit
- 3: Sendeeinheit
- 4: Steuereinheit
- 10: Vorrichtung zur Steuerung eines Nutzkanalverbindungsaufbaus
- N: Netzwerk
- BS: Basisstation
- MT: Mobilteil
- LV: lokaler Verbindungswunsch
- SB: Synchronisationspuls
- AP: Abfragepuls
- ND: Nutzdaten
- AE: Auswerteergebnis
- FR: Zeitrahmen
- FS: Zeitschlitz
- RX: Empfangszeitschlitz
- TX: Sendezeitschlitz
- BK: belegter Kanal
- DB: Dummy-Bearer
- f: Frequenz
- XSync: erweiterte Synchronisationsinformation
- S: Positionsinformation
- F: Scramblerinformation
- L: Dummy-Bearer-Information
- C: Checksumme

## Patentansprüche

1. Vorrichtung zur Steuerung des Aufbaus einer Nutzkanalverbindung in einem Kommunikationssystem mit drahtloser Schnittstelle aus einem asynchronen Ruhezu-stand, wobei die Schnittstelle einen periodisch wiederkehrenden Zeitrahmen (FR) auf-weist, und die drahtlose Kommunikation in dem Kommunikationssystem auf mehreren Frequenzen (f) eines Frequenzbereichs und in mehreren Zeitschlitzen (FS) pro Zeitrahmen (FR) abgewickelt wird, wobei die Anzahl der Zeitschlitze (FS) pro Zeitrahmen (FR) in Sendezeitschlitze (TX) und Empfangszeitschlitze (RX) unterteilt wird, mit:
einer Empfangseinheit (1) zum Empfangen von Eingangssignalen (SB) auf der drahtlosen Schnittstelle;
einer Auswerteeinheit (2) zum Auswerten der empfangenen Eingangssignale (SB) ;
einer Sendeeinheit (3) zum Senden von Ausgangssignalen (ND) auf der drahtlosen Schnittstelle; und einer Steuereinheit (4) zum Steuern der Sendeeinheit (3) in Abhängigkeit vom Auswerteergebnis (AE), **dadurch gekennzeichnet, dass**
die Auswerteeinheit (2) dazu geignet ist, einen Synchronisationspuls (SB) mit einer erweiterten Synchronisationsinformation (XSync), die eine Positionsinformation (S) des Synchronisationspulses (SB) innerhalb des Zeitrahmens (FR) angibt, zuerkennen und die Positionsinformation (S) auszuwerten; und
die Steuereinheit (4) dazu geignet ist, die Sendeeinheit (3) zum Aufbau einer synchronen Nutzkanalverbindung entsprechend der ausgewerteten Positionsinformation anzusteuern, wobei die Auswerteeinheit (2) dazu geignet ist, innerhalb der erweiterten Synchrordsationsinformation (XSync) eine Dummy-Bearer-Information (L) zuerkennen und auszuwerten, die eine Frequenz (f) und einen Zeitschlitz (FS) angibt, an dem ein normaler "Dummy-Bearer" (DB) zu finden ist.

2. Vorrichtung nach Patentanspruch 1, **dadurch gekennzeichnet, dass** die Auswerteeinheit (2) dazu geignet ist, innerhalb der Positionsinformation (S) eine zeitschlitzbezogene Positions-information (S-Pos) sowie eine Zeitschlitzinformation (Slot) zuerkennen und auszuwerten.

3. Vorrichtung nach einem der Patentansprüche 1 und 2, **dadurch gekennzeichnet, dass** die Auswerteeinheit (2) dazu geignet ist, innerhalb der erweiterten Synchronisationsinformation (XSync) eine Sendefrequenzinformation (PSCN) sowie einen Rahmenzähler (Framecnt) erkennt und auswertet.

4. Vorrichtung nach einem der Patentansprüche 1 bis 3, **dadurch gekennzeichnet, dass** die Auswerteeinheit (2) dazu geignet ist, innerhalb der erweiterten Synchronisationsinformation (XSync) eine Checksumme (C) zuerkennen und auszuwerten.

5. Verfahren zur Steuerung des Aufbaus einer Nutzkanalverbindung in einem Kommunikationssystem mit drahtloser Schnittstelle aus einem asynchronen Ruhezustand, wobei die Schnittstelle einen periodisch wiederkehrenden Zeitrahmen (FR) aufweist und die drahtlose Kommunikation in dem Kommunikationssystem auf mehreren Frequenzen (f) eines Frequenzberichs und in mehreren Zeitschlitzen (FS) pro Zeitrahmen (FR) abgewickelt wird wobei die Anzahl der Zeitschlitze (FS) pro Zeitrahmen (FR) in Sendezeitschlitze (TX) und Empfangszeitschlitze Zeit (RX) unterteilt wird mit den Schritten:
Empfangen von Eingangssignalen (SB) auf der drahtlosen Schnittstelle; Auswerten der empfangenen Eingangssignale (SB); und Senden von Ausgangssignalen (ND) auf der drahtlosen Schnittstelle in Abhängigkeit vom Auswerteergebnis (AE), **dadurch gekennzeichnet, dass** beim Auswerten ein Synchronisationspuls (SB) mit einer erweiterten Synchronisationsinformation (XSync), die eine Positionsinformation (S) des Synchronisationspulses (SB) innerhalb des Zeitrahmens (FR) angibt, erkannt wird und die Positionsinformation (S) ausgewertet wird; und beim Senden eine synchrone Nutzkanalverbindung entsprechend der ausgewerteten Positionsinformation aufgebaut wird, wobei beim Auswerten der erweiterten Synchronisationsintonnation (XSync) eine Dummy-Bearer-Information (L) erkannt und ausgewertet wird, die eine Frequenz (f) und einen Zeitschlitz (FS) angibt, an dem ein normaler "Dummy-Bearer" (DB) zu finden ist.

6. Verfahren nach Patentanspruch 5, wobei beim Auswerten der Positionsinformation (S) eine zeitschlitzbezogene Positionsinformation (S-Pos) und eine Zeitschlitzinformation (Slot) erkannt und ausgewertet wird.

7. Verfahren nach einem der Patentansprüche 5 und 6, wobei beim Auswerten der erweiterten Synchronisationsinformation (XSync) eine Sendefrequenzinformation (PSCN) und ein Rahmenzähler (Framecnt) erkannt und ausgewertet wird.

8. Verfahren nach einem der Patentansprüche 5 bis 7, wobei beim Auswerten der erweiterten Synchronisationsinformation (XSync) eine Checksumme (C) erkannt und ausgewertet wird.

## Claims

1. Apparatus for controlling the setup of a user channel connection in a communication system with a wireless interface from an asynchronous quiescent state, wherein the interface has a periodically recurring time frame (FR) and the wireless communication in the communication system is handled on a plurality of frequencies (f) in a frequency range and in a plurality of timeslots (FS) per time frame (FR), wherein the number of timeslots (FS) per time frame (FR) is divided into transmission timeslots (TX) and reception timeslots (RX), having:
a reception unit (1) for receiving input signals (SB) on the wireless interface;
an evaluation unit (2) for evaluating the received input signals (SB);
a transmission unit (3) for sending output signals (ND) on the wireless interface; and a control unit (4) for controlling the transmission unit (3) on the basis of the evaluation result (AE), **characterized in that** the evaluation unit (2) is suitable for recognizing a synchronization pulse (SB) having an extended synchronization information item (XSync), which indicates a position information item (S) for the synchronization pulse (SB) within the time frame (FR), and for evaluating the position information item (S); and
the control unit (4) is suitable for actuating the transmission unit (3) to set up a synchronous user channel connection in accordance with the evaluated position information item, wherein the evaluation unit (2) is suitable for recognizing and evaluating, within the extended synchronization information item (XSync), a dummy bearer information item (L) which indicates a frequency (f) and a timeslot (FS) at which a normal "dummy bearer" (DB) can be found.

2. Apparatus according to Patent Claim 1, **characterized in that** the evaluation unit (2) is suitable for recognizing and evaluating, within the position information item (S), a timeslot-oriented position information item (S-Pos) and also a timeslot information item (Slot).

3. Apparatus according to one of Patent Claims 1 and 2, **characterized in that** the evaluation unit (2) is suitable for recognizing and evaluating, within the extended synchronization information item (XSync), a transmission frequency information item (PSCN) and also a frame counter (Framecnt).

4. Apparatus according to one of Patent Claims 1 to 3, **characterized in that** the evaluation unit (2) is suitable for recognizing and evaluating, within the extended synchronization information item (XSync), a checksum (C).

5. Method for controlling the setup of a user channel connection in a communication system with a wireless interface from an asynchronous quiescent state, wherein the interface has a periodically recurring time frame (FR) and the wireless communication in the communication system is handled on a plurality of frequencies (f) in a frequency range and in a plurality of timeslots (FS) per time frame (FR), wherein the number of timeslots (FS) per time frame (FR) is divided into transmission timeslots (TX) and reception timeslots (RX), having the following steps:
input signals (SB) are received on the wireless interface; the received input signals (SB) are evaluated; and output signals (ND) are sent on the wireless interface on the basis of the evaluation result (AE), **characterized in that** the evaluation involves a synchronization pulse (SB) with an extended synchronization information item (XSync), which indicates a position information item (S) for the synchronization pulse (SB) within the time frame (FR), being recognized and the position information item (S) being evaluated; and the sending involves a synchronous user channel connection being set up in accordance with the evaluated position information item, wherein the evaluation of the extended synchronization information item (XSync) involves the recognition and evaluation of a dummy bearer information item (L) which indicates a frequency (f) and a timeslot (FS) at which a normal "dummy bearer" (DB) can be found.

6. Method according to Patent Claim 5, wherein the evaluation of the position information item (S) involves the recognition and evaluation of a timeslot-oriented position information item (S-Pos) and a timeslot information item (Slot).

7. Method according to one of Patent Claims 5 and 6, wherein the evaluation of the extended synchronization information item (xSync) involves the recognition and evaluation of a transmission frequency information item (PSCN) and a frame counter (Framecnt).

8. Method according to one of Patent Claims 5 to 7, wherein the evaluation of the extended synchronization information item (XSync) involves the recognition and evaluation of a checksum (C).

## Revendications

1. Dispositif de commande de l'établissement d'une liaison de canal utile dans un système de communication avec interface sans fil à partir d'un état de repos asynchrone, l'interface comportant une trame temporelle (FR) revenant de façon périodique et la communication sans fil dans le système de communication se déroulant sur plusieurs fréquences (f) d'une plage de fréquences et dans plusieurs créneaux temporels (FS) par trame temporelle (FR), le nombre des créneaux temporels (FS) par trame temporelle (FR) étant divisé en créneaux temporels d'émission (TX) et en créneaux temporels de réception (Rx), avec :
- une unité de réception (1) pour la réception de signaux d'entrée (SB) sur l'interface sans fil ;
- une unité d'évaluation (2) pour l'évaluation des signaux d'entrée reçus (SB) ;
- une unité d'émission (3) pour l'émission de signaux de sortie (ND) sur l'interface sans fil ;
- et une unité de commande (4) pour la commande de l'unité d'émission (3) en fonction du résultat d'évaluation (AE) ;
**caractérisé en ce que** l'unité d'évaluation (2) est conçue pour détecter une impulsion de synchronisation (SB) avec une information de synchronisation étendue (Xsync) qui donne une information de position (S) de l'impulsion de synchronisation (SB) à l'intérieur de la trame temporelle (FR) et pour évaluer l'information de position (S) ;
et **en ce que** l'unité de commande (4) est conçue pour commander l'unité d'émission (3) en vue de l'établissement d'une liaison de canal utile synchrone en fonction de l'information de position évaluée, l'unité d'évaluation (2) étant conçue pour détecter et évaluer à l'intérieur de l'information de synchronisation étendue (Xsync) une information de porteuse fictive (L) qui donne une fréquence (f) et un créneau temporel (FS) dans lequel doit être trouvée une porteuse fictive normale (DB « Dummy Bearer »).

2. Dispositif selon la revendication 1, **caractérisé en ce que** l'unité d'évaluation (2) est conçue pour détecter et évaluer à l'intérieur de l'information de position (S) une information de position (S-Pos) se rapportant au créneau temporel ainsi qu'une information de créneau temporel (Slot).

3. Dispositif selon l'une des revendications 1 et 2, **caractérisé en ce que** l'unité d'évaluation (2) est conçue pour détecter et évaluer à l'intérieur de l'information de synchronisation étendue (Xsync) une information de fréquence d'émission (PSCN) ainsi qu'un compteur de trames (Framecnt).

4. Dispositif selon l'une des revendications 1 à 3, **caractérisé en ce que** l'unité d'évaluation (2) est conçue pour détecter et évaluer à l'intérieur de l'information de synchronisation étendue (Xsync) une somme de contrôle (C).

5. Procédé de commande de l'établissement d'une liaison de canal utile dans un système de communication avec interface sans fil à partir d'un état de repos asynchrone, l'interface comportant une trame temporelle (FR) revenant périodiquement et la communication sans fil dans le système de communication se déroulant sur plusieurs fréquences (f) d'une plage de fréquences et dans plusieurs créneaux temporels (FS) par trame temporelle (FR), le nombre des créneaux temporels (FS) par trame temporelle (FR) étant divisé en créneaux temporels d'émission (TX) et créneaux temporels de réception (RX), avec les étapes :
- réception de signaux d'entrée (SB) sur l'interface sans fil ;
- évaluation des signaux d'entrée reçus (SB) ;
- et émission de signaux de sortie (ND) sur l'interface sans fil en fonction du résultat d'évaluation (AE) ;
**caractérisé en ce que** l'on détecte lors de l'évaluation une impulsion de synchronisation (SB) avec une information de synchronisation étendue (Xsync) qui donne une information de position (S) de l'impulsion de synchronisation (SB) à l'intérieur de la trame temporelle (FR) et l'on évalue l'information de position (S) ;
et **en ce que** l'on établit lors de l'émission une liaison de canal utile synchrone en fonction de l'information de position évaluée, une information de porteuse fictive (L) qui donne une fréquence (f) et un créneau temporel (FS) dans lequel doit être trouvée une porteuse fictive normale (DB, « Dummy Bearer ») détectée et évaluée lors de l'évaluation de l'information de synchronisation étendue (Xsync).

6. Procédé selon la revendication 5, une information de position (S-Pos) se rapportant au créneau temporel ainsi qu'une information de créneau temporel (Slot) étant détectées et évaluées lors de l'évaluation de l'information de position (S).

7. Procédé selon l'une des revendications 5 et 6, une information de fréquence d'émission (PSCN) et un compteur de trames (Framecnt) étant détectés et évalués lors de l'évaluation de l'information de synchronisation étendue (Xsync).

8. Procédé selon l'une des revendications 5 à 7, une somme de contrôle (C) étant détectée et évaluée lors de l'évaluation de l'information de synchronisation étendue (Xsync).
